(19) 

Europäisches
Patentamt

European
Patent Office

Office européen
des brevets

(11) **EP 4 676 112 A1**

(12) **EUROPEAN PATENT APPLICATION**
published in accordance with Art. 153(4) EPC

(43) Date of publication:
**07.01.2026 Bulletin 2026/02**

(21) Application number: **23922056.9**

(22) Date of filing: **17.02.2023**

(51) International Patent Classification (IPC):
***H04W 24/08*** *(2009.01)*

(52) Cooperative Patent Classification (CPC):
**H04B 17/345; H04W 24/08; H04W 56/00**

(86) International application number:
**PCT/CN2023/076997**

(87) International publication number:
**WO 2024/168925 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **WU, Shijuan
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **INTERFERENCE MEASUREMENT METHOD, COMMUNICATION DEVICE, AND STORAGE
MEDIUM**

(57)     The present disclosure relates to an interference measurement method, a communication device, and a storage medium. The method comprises: determining a receiving time of a reference signal, wherein there is an offset between the receiving time and a downlink (DL) slot boundary; and receiving the reference signal on the basis of the receiving time, and executing interference measurement. According the present disclosure, the receiving time, having the offset from the DL slot boundary, of the reference signal is determined to execute the interference measurement, thereby improving the accuracy of the interference measurement and reducing the complexity of the interference measurement.

```
┌──────────────────────────────────────────────┐      S11
│ determine a receiving time of a reference signal │
└──────────────────────────────────────────────┘
                      │
                      ▼
┌──────────────────────────────────────────────┐      S12
│ receive the reference signal based on the receiving time │
└──────────────────────────────────────────────┘
                      │
                      ▼
┌──────────────────────────────────────────────┐      S13
│ perform an interference measurement          │
└──────────────────────────────────────────────┘
```

FIG. 5

**Description**

## TECHNICAL FIELD

The disclosure relates to the field of communication technology, and in particular to an interference measurement method, a communication device, and a storage medium.

## BACKGROUND

In related arts, in a dynamic time division duplex (DTDD) scenario, in order to improve uplink communication performance, a proportion of uplink (UL) transmission slots is increased accordingly in a time division duplex (TDD) configuration. Assuming that a neighboring cell adopts a legacy DTDD structure, such scenario will lead to inconsistency in transmission directions of the two cells, thus causing serious interference.

For measuring an interference between multiple terminals in two adjacent cells, a cross link interference (CLI) may be measured by sending a reference signal by the terminal. For example, terminal 1 in a neighboring cell sends a reference signal, and terminal 2 in a serving cell receives the reference signal and performs measurement. Terminal 2 may be called a serving terminal, and terminal 1 may be called an aggressor terminal. The serving terminal may also be called a victim terminal.

However, an arrival time of the reference signal sent by the aggressor terminal to the victim terminal has a certain time error with a downlink transmission time allocated to the victim terminal, which makes it impossible for the victim terminal to accurately know the time of receiving the reference signal, resulting in low CLI measurement accuracy.

## SUMMARY

In order to overcome the problems existing in related arts, the disclosure provides interference measurement methods, related communication devices and a related storage medium.

According to a first aspect of the embodiments of the disclosure, there is provided an interference measurement method. The method is performed by a terminal and includes determining a receiving time of a reference signal, in which there is an offset between the receiving time and a downlink (DL) slot boundary, and the DL slot boundary is a starting time position for receiving downlink data; receiving the reference signal based on the receiving time; and performing an interference measurement.

In some embodiments, determining the receiving time of the reference signal includes: determining a timing advance offset value $N_{TA, \text{offset}}$ and a timing advance value $N_{TA}$, in which the timing advance offset value $N_{TA, \text{offset}}$ and the timing advance value $N_{TA}$ are used for describing a timing advance (TA) corresponding to the terminal in a serving cell; determining a receiving time offset based on the timing advance offset value $N_{TA, \text{offset}}$ and the timing advance value $N_{TA}$; and determining the receiving time based on the receiving time offset and the DL slot boundary.

In some embodiments, the receiving time offset includes a first receiving time offset; determining the receiving time offset based on the timing advance offset value $N_{TA, \text{offset}}$ and the timing advance value $N_{TA}$ includes: determining the first receiving time offset based on a sum of the timing advance offset value $N_{TA, \text{offset}}$ and the timing advance value $N_{TA}$ multiplied by a first parameter.

In some embodiments, the serving cell and a neighboring cell belong to heterogeneous networks, the first receiving time offset is $\left( N_{TA, \text{offset}} + \dfrac{N_{TA}}{2} \right) T_c$, and the first parameter is $\dfrac{1}{2}$; or the serving cell and a neighboring cell belong to homogeneous networks, the first receiving time offset is $(N_{TA, \text{offset}} + N_{TA}) T_c$, and the first parameter is 1; where $T_c$ denotes a basic time value.

In some embodiments, the receiving time offset includes a second receiving time offset and the method further includes: receiving indication information, in which the indication information is used for indicating a synchronization error between a first network device of the serving cell and a second network device of a neighboring cell; in which determining the receiving time offset based on the timing advance offset value $N_{TA, \text{offset}}$ and the timing advance value $N_{TA}$ includes determining the second receiving time offset based on the timing advance offset value $N_{TA, \text{offset}}$, the timing advance value $N_{TA}$ and the synchronization error.

In some embodiments, the receiving time offset further includes a first receiving time offset and determining the second receiving time offset based on the timing advance offset value $N_{TA, \text{offset}}$, the timing advance value $N_{TA}$ and the synchronization error includes determining the first receiving time offset based on a sum of the timing advance offset value $N_{TA, \text{offset}}$ and the timing advance value $N_{TA}$ multiplied by a first parameter; and determining the second receiving time offset based on a sum of the first receiving time offset and the synchronization error.

In some embodiments, the serving cell where the terminal is located and the neighboring cell belong to heterogeneous networks, the second receiving time offset is $\left(N_{TA,\ offset} + \dfrac{N_{TA}}{2}\right)T_c + \Delta_{max}$ , and the first parameter

is $\dfrac{1}{2}$ ; or the serving cell where the terminal is located and the neighboring cell belong to homogeneous networks, the second receiving time offset is $(N_{TA,\ offset} + N_{TA})T_c + \Delta_{max}$, and the first parameter is 1, where $T_c$ denotes a basic time value, and $\Delta_{max}$ denotes the synchronization error.

In some implementations, the timing advance offset value $N_{TA,\ offset}$ is configured for a terminal of a neighboring cell, or the timing advance offset value $N_{TA,\ offset}$ is configured for the terminal.

According to a second aspect of embodiments of the disclosure, there is provided an interference measurement method, performed by a network device. The method includes: determining a receiving time of a reference signal, in which there is an offset between the receiving time and a downlink (DL) slot boundary, and the DL slot boundary is a starting time position for a terminal to receive downlink data, and determining not to send the downlink data in a slot corresponding to the receiving time, in which the slot corresponding to the receiving time is used by the terminal to receive the reference signal and to perform an interference measurement.

In some embodiments, determining the receiving time of the reference signal includes: determining a timing advance offset value $N_{TA,\ offset}$ and a timing advance value $N_{TA}$, in which the timing advance offset value $N_{TA,\ offset}$ and the timing advance value $N_{TA}$ are used for describing a timing advance (TA) corresponding to the terminal in a serving cell; determining the receiving time offset based on the timing advance offset value $N_{TA,\ offset}$ and the timing advance value $N_{TA}$; and determining the receiving time based on the receiving time offset and the DL slot boundary.

In some embodiments, the receiving time offset includes a first receiving time offset; determining the receiving time offset based on the timing advance offset value $N_{TA,\ offset}$ and the timing advance value $N_{TA}$ includes: determining the first receiving time offset based on a sum of the timing advance offset value $N_{TA,\ offset}$ and the timing advance value $N_{TA}$ multiplied by a first parameter.

In some embodiments, the serving cell and a neighboring cell belong to heterogeneous networks, the first receiving time offset is $\left(N_{TA,\ offset} + \dfrac{N_{TA}}{2}\right)T_c$ , and the first parameter is $\dfrac{1}{2}$ ; or the serving cell and a neighboring cell belong to homogeneous networks, the first receiving time offset is $(N_{TA,\ offset} + N_{TA})T_c$, and the first parameter is 1; where $T_c$ denotes a basic time value.

In some embodiments, the receiving time offset includes a second receiving time offset and the method further includes: sending indication information, in which the indication information is used for indicating a synchronization error between a first network device of the serving cell and a second network device of a neighboring cell; determining the receiving time offset based on the timing advance offset value $N_{TA,\ offset}$ and the timing advance value $N_{TA}$ includes determining the second receiving time offset based on the timing advance offset value $N_{TA,\ offset}$, the timing advance value $N_{TA}$ and the synchronization error.

In some embodiments, the receiving time offset further includes a first receiving time offset and determining the second receiving time offset based on the timing advance offset value $N_{TA,\ offset}$, the timing advance value $N_{TA}$ and the synchronization error includes determining the first receiving time offset based on a sum of the timing advance offset value $N_{TA,\ offset}$ and the timing advance value $N_{TA}$ multiplied by a first parameter; and determining the second receiving time offset based on a sum of the first receiving time offset and the synchronization error.

In some embodiments, the serving cell where the terminal is located and a neighboring cell belong to heterogeneous networks, the second receiving time offset is $\left(N_{TA,\ offset} + \dfrac{N_{TA}}{2}\right)T_c + \Delta_{max}$ , and the first parameter is 1 $\dfrac{1}{2}$ ;

or the serving cell where the terminal is located and a neighboring cell belong to homogeneous networks, the second receiving time offset is $(N_{TA,\ offset} + N_{TA})T_c + \Delta_{max}$, and the first parameter is 1; where $T_c$ denotes a basic time value, and $\Delta_{max}$ denotes the synchronization error.

In some implementations, the timing advance offset value $N_{TA,\ offset}$ is configured for a terminal of a neighboring cell, or the timing advance offset value $N_{TA,\ offset}$ is configured for the terminal.

According to a third aspect of the embodiments of the disclosure, a communication device is provided. The communication device includes a processing module configured to determine a receiving time of a reference signal, in which there is an offset between the receiving time and a downlink (DL) slot boundary, and the DL slot boundary is a starting time position for receiving downlink data; and a receiving module configured to receive the reference signal based on the receiving time; in which the processing module is further configured to perform an interference measurement.

In some embodiments, the processing module is further configured to: determine a timing advance offset value

$N_{TA, \, offset}$ and a timing advance value $N_{TA}$, in which the timing advance offset value $N_{TA, \, offset}$ and the timing advance value $N_{TA}$ are used for describing a timing advance (TA) corresponding to the terminal in a serving cell; determine a receiving time offset based on the timing advance offset value $N_{TA, \, offset}$ and the timing advance value $N_{TA}$; and determine the receiving time based on the receiving time offset and the DL slot boundary.

In some embodiments, the receiving time offset includes a first receiving time offset; the processing module is further configured to determine the first receiving time offset based on a sum of the timing advance offset value $N_{TA, \, offset}$ and the timing advance value $N_{TA}$ multiplied by a first parameter.

In some embodiments, the serving cell and a neighboring cell belong to heterogeneous networks, the first receiving time offset is $\left( N_{TA, \, offset} + \dfrac{N_{TA}}{2} \right) T_c$ , and the first parameter is $\dfrac{1}{2}$ ; or the serving cell and a neighboring cell belong to homogeneous networks, the first receiving time offset is $(N_{TA, \, offset} + N_{TA})T_c$, and the first parameter is 1; where T denotes a basic time value.

In some embodiments, the receiving time offset includes a second receiving time offset and the receiving module is further configured to receive indication information, in which the indication information is used for indicating a synchronization error between a first network device of the serving cell and a second network device of a neighboring cell; and the processing module is further configured to determine the second receiving time offset based on the timing advance offset value $N_{TA, \, offset}$ , the timing advance value $N_{TA}$ and the synchronization error.

In some embodiments, the receiving time offset further includes a first receiving time offset and the processing module is further configured to: determine the first receiving time offset based on a sum of the timing advance offset value $N_{TA, \, offset}$ and the timing advance value $N_{TA}$ multiplied by a first parameter and determine the second receiving time offset based on a sum of the first receiving time offset and the synchronization error.

In some embodiments, the serving cell where the terminal is located and the neighboring cell belong to heterogeneous networks, the second receiving time offset is $\left( N_{TA, \, offset} + \dfrac{N_{TA}}{2} \right) T_c + \Delta_{max}$ , and the first parameter is $\dfrac{1}{2}$ ; or the serving cell where the terminal is located and the neighboring cell belong to homogeneous networks, the second receiving time $_{offset}$ is $(N_{TA, \, offset} + N_{TA})T_c + \Delta_{max}$, and the first parameter is 1, where $T_c$ denotes a basic time value, and $\Delta_{max}$ denotes the synchronization error.

In some implementations, the timing advance offset value $N_{TA, \, offset}$ is configured for a terminal of a neighboring cell, or the timing advance offset value $N_{TA, \, offset}$ is configured for the terminal.

According to a fourth aspect of the embodiments of the disclosure, a communication device is provided. The communication device includes a processing module configured to determine a receiving time of a reference signal, in which there is an offset between the receiving time and a downlink (DL) slot boundary, and the DL slot boundary is a starting time position for a terminal to receive downlink data; and a sending module configured to determine not to send the downlink data in a slot corresponding to the receiving time, in which the slot corresponding to the receiving time is used by the terminal to receive the reference signal and to perform an interference measurement.

In some embodiments, the processing module is further configured to determine a timing advance offset value $N_{TA, \, offset}$ and a timing advance value $N_{TA}$, in which the timing advance offset value $N_{TA, \, offset}$ and the timing advance value $N_{TA}$ are used for describing a timing advance (TA) corresponding to the terminal in a serving cell; and determine the receiving time offset based on the timing advance offset value $N_{TA, \, offset}$ and the timing advance value $N_{TA}$; and determine the receiving time based on the receiving time offset and the DL slot boundary.

In some embodiments, the receiving time offset includes a first receiving time offset; and the processing module is further configured to determine the first receiving time offset based on a sum of the timing advance offset value $N_{TA, \, offset}$ and the timing advance value $N_{TA}$ multiplied by a first parameter.

In some embodiments, the serving cell and a neighboring cell belong to heterogeneous networks, the first receiving time offset is $\left( N_{TA, \, offset} + \dfrac{N_{TA}}{2} \right) T_c$ , and the first parameter is $\dfrac{1}{2}$ ; or the serving cell and a neighboring cell belong to homogeneous networks, the first receiving time offset is $(N_{TA, \, offset} + N_{TA}) T_c$, and the first parameter is 1; where $T_c$ denotes a basic time value.

In some embodiments, the receiving time offset includes a second receiving time offset, the sending module is further configured to send indication information, in which the indication information is used for indicating a synchronization error between a first network device of the serving cell and a second network device of a neighboring cell; and the processing module is further configured to determine the second receiving time offset based on the timing advance offset

value $N_{TA, \text{offset}}$, the timing advance value $N_{TA}$ and the synchronization error.

In some embodiments, the receiving time offset further includes a first receiving time offset and the processing module is further configured to: determine the first receiving time offset based on a sum of the timing advance offset value $N_{TA, \text{offset}}$ and the timing advance value $N_{TA}$ multiplied by a first parameter; and determine the second receiving time offset based on a sum of the first receiving time offset and the synchronization error.

In some embodiments, the serving cell where the terminal is located and a neighboring cell belong to heterogeneous networks, the second receiving time offset is $\left( N_{TA, \text{offset}} + \dfrac{N_{TA}}{2} \right) T_c + \Delta_{\max}$, and the first parameter is $\dfrac{1}{2}$; or the serving cell where the terminal is located and a neighboring cell belong to homogeneous networks, the second receiving time offset is $(N_{TA, \text{offset}} + N_{TA})T_c + \Delta_{\max}$, and the first parameter is 1; where $T_c$ denotes a basic time value, and $\Delta_{\max}$ denotes the synchronization error.

In some implementations, the timing advance offset value $N_{TA, \text{offset}}$ is configured for a terminal of a neighboring cell, or the timing advance offset value $N_{TA, \text{offset}}$ is configured for the terminal.

According to a fifth aspect of the embodiments of the disclosure, a communication device is provided. The communication device includes a processor and a memory for storing processor-executable instructions. The processor is configured to perform the methods of the first aspect and any one of the methods in the first aspect.

According to a sixth aspect of the embodiments of the disclosure, a communication device is provided. The communication device includes a processor and a memory for storing processor-executable instructions. The processor is configured to perform the methods of the second aspect and any one of the methods in the second aspect.

According to a seventh aspect of the embodiments of the disclosure, a communication system is provided. The communication system includes a terminal and a network device. The terminal is configured to perform the methods in the first aspect and any one of the methods in the first aspect. The network device is configured to perform the methods in the second aspect and any one of the methods in the second aspect.

According to an eighth aspect of the embodiments of the disclosure, a non-transitory computer-readable storage medium is provided. When instructions in the storage medium are executed by a processor of a terminal, the terminal is enabled to perform the methods in the first aspect and any one of the methods in the first aspect.

According to a ninth aspect of the embodiments of the disclosure, a non-transitory computer-readable storage medium is provided. When instructions in the storage medium are executed by a processor of a terminal, the terminal is enabled to perform the methods in the second aspect and any one of the methods in the second aspect.

The technical solution according to the embodiments of the disclosure may include the following beneficial effects. By determining the receiving time of the reference signal that has an offset from the downlink slot boundary to perform the interference measurement, the interference measurement accuracy is improved and the complexity of the interference measurement is reduced.

It may be understood that the foregoing general description and the following detailed description are illustrative and explanatory only and are not restrictive of the disclosure.

## BRIEF DESCRIPTION OF THE DRAWINGS

The accompanying drawings, which are incorporated in and constitute a part of this specification, illustrate embodiments consistent with the disclosure and, together with the description, explain the principles of the disclosure.

FIG. 1 is a schematic diagram illustrating a wireless communication system according to an example embodiment.
FIG. 2 is a schematic diagram illustrating an interference scenario according to an example embodiment.
FIG. 3 is a schematic diagram illustrating a cross link interference (CLI) measurement scenario according to an example embodiment.
FIG. 4 is a schematic diagram illustrating a timing sequence of data transmission symbols according to an example embodiment.
FIG. 5 is a flowchart illustrating an interference measurement method according to an example embodiment.
FIG. 6 is a flowchart illustrating another interference measurement method according to an example embodiment.
FIG. 7 is a flowchart illustrating yet another interference measurement method according to an example embodiment.
FIG. 8 is a flowchart illustrating yet another interference measurement method according to an example embodiment.
FIG. 9 is a flowchart illustrating another interference measurement method according to an example embodiment.
FIG. 10 is a flowchart illustrating yet another interference measurement method according to an example embodiment.
FIG. 11 is a flowchart illustrating yet another interference measurement method according to an example embodiment.

FIG. 12 is a schematic diagram illustrating a time difference between a reference signal and a downlink symbol boundary according to an example embodiment.

FIG. 13 is a schematic diagram illustrating a synchronization error between network devices according to an example embodiment.

FIG. 14 is a schematic diagram illustrating a communication device according to an example embodiment.

FIG. 15 is a schematic diagram illustrating another communication device according to an example embodiment.

FIG. 16 is a schematic diagram illustrating a communication device according to an example embodiment.

FIG. 17 is a schematic diagram illustrating another communication device according to an example embodiment.

**DETAILED DESCRIPTION**

Here, example embodiments will be described in detail, examples of which are shown in the accompanying drawings. When the following description refers to the drawings, unless otherwise indicated, the same numbers in different drawings represent the same or similar elements. The embodiments described in the following example embodiments do not represent all embodiments consistent with the disclosure.

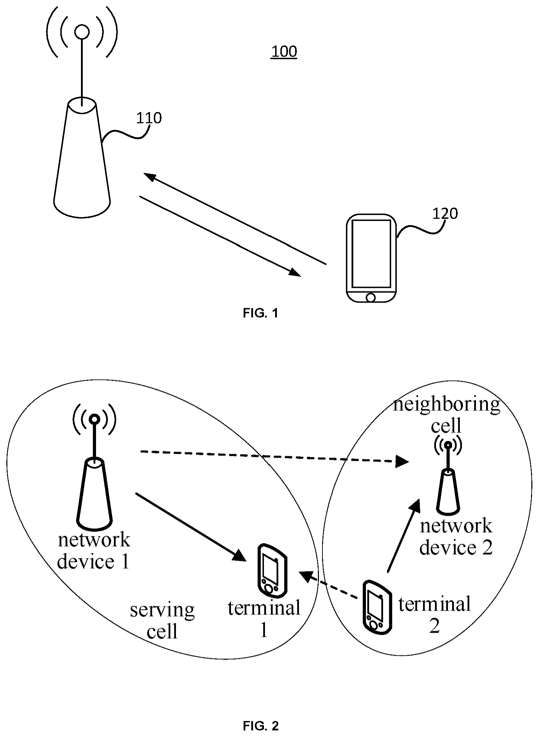

Communication methods involved in the disclosure may be applied to a wireless communication system 100 illustrated in FIG. 1. A network system may include a network device 110 and a terminal 120. It may be understood that the wireless communication system illustrated in FIG. 1 is only for schematic illustration, and the wireless communication system may also include other network devices which are not illustrated in FIG. 1, for example, core network devices, wireless relay devices, and wireless backhaul devices. The embodiments of the disclosure do not limit the number of network devices and the number of terminals included in the wireless communication system.

It may be further understood that the wireless communication system of the embodiments of the disclosure is a network that provides wireless communication functions. The wireless communication system may adopt different communication technologies, such as code division multiple access (CDMA), wideband code division multiple access (WCDMA), time division multiple access (TDMA), frequency division multiple access (FDMA), orthogonal frequency-division multiple access (OFDMA), single carrier-frequency division multiple access (SC-FDMA), carrier sense multiple access with collision avoidance. Based on the capacity, rate, delay and other factors of different networks, the network may be classified as a second generation (2G) network, a third generation (3G) network, a fourth generation (4G) network or future evolution network, such as a 5th generation wireless communication system (5G) network. The 5G network may also be called new radio (NR). For the convenience of description, the disclosure sometimes refers to the wireless communication network as a network.

Furthermore, the network device 110 involved in the disclosure may also be referred to as a wireless access network device. The wireless access network device may be a base station, an evolved node B (eNB), a home base station, an access point (AP) in a wireless fidelity (WIFI) system, a wireless relay node, a wireless backhaul node, a transmission point (TP) or a transmission reception point (TRP), etc. It may also be a gNB in an NR system, or it may also be a component or a part of a device constituting a base station. When it is a vehicle-to-everything (V2X) communication system, the network device may also be a vehicle-mounted device. It may be understood that in the embodiments of the disclosure, the specific technology and specific device form adopted by the network device are not limited.

Furthermore, the terminal 120 involved in the disclosure may also be referred to as a terminal device, user equipment (UE), mobile station (MS), mobile terminal (MT), etc., which is a device that provides voice and/or data connectivity to users. For example, the terminal may be a handheld device with wireless connection function, a vehicle-mounted device, etc. At present, some examples of terminals are a smart phone (mobile phone), a pocket personal computer (PPC), a handheld computer, a personal digital assistant (PDA), a laptop computer, a tablet computer, a wearable device, or a vehicle-mounted device, etc. In addition, when it is a vehicle-to-everything (V2X) communication system, the terminal device may also be a vehicle-mounted device. It may be understood that the embodiments of the disclosure do not limit the specific technology and specific device form adopted by the terminal.

In the embodiments of the disclosure, the network device 110 and the terminal 120 may use any feasible wireless communication technology to achieve mutual data transmission. A transmission channel corresponding to data sent by the network device 110 to the terminal 120 is called a downlink (DL) channel, and a transmission channel corresponding to data sent by the terminal 120 to the network device 110 is called an uplink (UL) channel. It may be understood that the network device involved in the embodiments of the disclosure may be a base station. Certainly, the network device may also be any other possible network device, and the terminal may be any possible terminal, which is not limited in the disclosure.

In a dynamic time division duplex (DTDD) scenario of Release (Rel) 18, for improving uplink communication performance, a proportion of uplink (UL) transmission slots is increased accordingly in a time division duplex (TDD) configuration. Assume that a neighboring cell adopts a legacy DTDD structure. This will lead to inconsistency in transmission directions of the two cells, thus causing serious interference.

For example, in the scenario illustrated in FIG. 2, it may be seen that a serving cell may include terminal 1 and network device 1. A neighboring cell adjacent to the serving cell may include terminal 2 and network device 2. When the serving cell and the neighboring cell both adopt the DTDD, but different DTDD configuration structures are adopted between the two cells, the serving cell and the neighboring cell will respectively perform uplink transmission and downlink transmission in a certain slot. For example, as illustrated in FIG. 2, network device 1 sends downlink data to terminal 1, while terminal 2 sends uplink data to network device 2. The two black solid arrows illustrated in FIG. 2 represent different transmission states of different cells in the same slot. In this case, since terminal 2 is in the slot of uplink transmission, the data sent by terminal 2 will also be transmitted to terminal 1. For terminal 1, it may receive the downlink data sent by network device 1 and the data sent by terminal 2 at the same time, thereby generating inter-symbol interference (ISI). The dotted arrow pointing from terminal 2 to terminal 1 in FIG. 2 represents the interference caused by the data sent by terminal 2 to terminal 1.

For measuring the interference between terminals in adjacent cells, Rel-16 uses a cross-link interference (CLI) sounding reference signal (SRS) to measure the interference of the reference signal received power (RSRP) between the corresponding terminals. In addition, a CLI received signal strength indicator (RSSI) is used for measuring the interference of the RSSI between the corresponding terminals. Also, a CLI reporting framework based on layer (L) 3 is defined.

Based on Rel-16, for further improving the performance of CLI measurement reporting, Rel-18 determines UE-to-UE CLI measurement reporting based on L1 or L2. Compared with the reporting based on L3, the corresponding reporting period may be shortened to adapt to different CLI scenarios more flexibly.

In some arts, to alleviate an impact on the UE-to-UE CLI measurement, the adoption of event-triggered measurement reporting may be considered, and periodic reporting, aperiodic reporting or semi-periodic (semi-persistent) reporting may be configured.

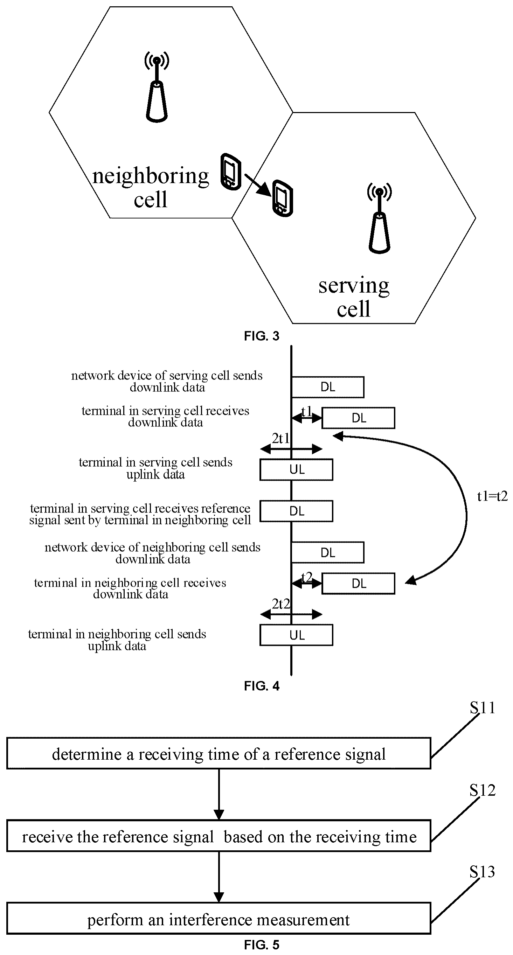

Considering the serving terminals, such as the victim terminals, corresponding to the same cell, the arrival time of the CLI reference signal received by each victim terminal from the aggressor terminal has a certain time error relative to the DL symbol. For example, as illustrated in FIG. 3, there is a certain error between the time when the reference signal sent by the terminal (such as the aggressor terminal) in the neighboring cell arrives at the terminal (such as the victim terminal) in the serving cell and the time when the terminal in the serving cell receives the downlink data sent by the network device. This error is related to time advance (TA) information of the aggressor terminal, to a propagation delay between the victim terminal and the network device of the serving cell, to a propagation delay between the victim terminal and the aggressor terminal, and to a synchronization error between network devices of different cells.

As illustrated in FIG. 4, it is assumed that a time offset of sending the downlink data by a network device is 0. For terminals in the same cell, the downlink data sent by the network device will be received after a certain delay, such as $T_1$ or $T_2$. It may be understood that $T_1$ is used for indicating the delay when the terminal in the serving cell receives the downlink data sent by the network device in the serving cell, and $T_2$ is used for indicating the delay when the terminal in the neighboring cell receives the downlink data sent by the network device in the serving cell. It may be understood that, under normal circumstances, the structure of the serving cell is similar to the structure of the neighboring cell, such that $T_1$ and $T_2$ may be approximately regarded as equal. In addition, under normal circumstances, the terminal often sends uplink data in advance such that the time offset of receiving the uplink data by the network device is 0.

For the time when the CLI reference signal arrives at the victim terminal, the time offset from the DL symbol boundary may be $N_{TA, \text{offset}} T_c + T_1 + T_2 - T_3$, where $N_{TA, \text{offset}}$ is the TA information configured for the aggressor terminal, $T_c$ is a basic time value, $T_1$ is the propagation delay from the victim terminal to the network device of the serving cell, $T_2$ is the propagation delay from the aggressor terminal to the network device of the neighboring cell, and $T_3$ is the propagation delay between the aggressor terminal and the victim terminal.

It may be seen that the time when the victim terminal receives the CLI reference signal is closely related to the TA information for the aggressor terminal. However, the victim terminal is unaware of the TA information for the aggressor terminal, so it is difficult for the victim terminal to determine the exact receiving time of the CLI reference signal.

However, in related arts, for example, Rel-16 proposes the CLI measurement reporting based on L3. Therefore, the Rel-16 terminal does not expect to receive downlink data sent by the network device in a previous data symbol of a symbol where the CLI measurement is configured. Further, the Rel-16 terminal determines the receiving time of the CLI reference signal from the aggressor terminal based on actual implementation.

However, for the victim terminal of Rel-18, it is impossible to accurately know the time of receiving the reference signal, which leads to low CLI measurement accuracy.

Therefore, the disclosure performs an interference measurement by determining a receiving time of a reference signal that has an offset from a downlink slot boundary, thereby improving the interference measurement accuracy and reducing the complexity of the interference measurement.

FIG. 5 is a flowchart illustrating an interference measurement method according to an example embodiment. As illustrated in FIG. 5, the method is performed by a terminal, which may be the victim terminal mentioned above. The method may include the following.

In step S11, a receiving time of a reference signal is determined.

In some embodiments, the terminal determines the receiving time of the reference signal. There is an offset between the receiving time and a DL slot boundary. The terminal may be considered as a terminal of a serving cell, and the DL slot may be considered as a starting time position of receiving, by the terminal, downlink data sent by a network device in the serving cell.

For example, for each reference signal, the terminal may determine a respective receiving time of the reference signal. For example, the reference signal may be a CLI reference signal used to perform CLI measurement. For example, when the victim terminal performs the CLI measurement with aggressor terminals of different neighboring cells, the victim terminal needs to determine the respective receiving time of the reference signal sent by each aggressor terminal respectively.

It may be understood that the offsets between the receiving times of different reference signals and the DL slot boundary of the terminal may be different.

In some embodiments, the terminal may receive configuration information sent by the network device. The configuration information may indicate the receiving time of the reference signal. For example, the network device determines the receiving time of the reference signal and informs the terminal of the receiving time through the configuration information. The terminal determines the receiving time of the reference signal after parsing the received configuration information.

In some embodiments, the terminal may determine the receiving time of the reference signal based on a protocol provision or a preset rule. For example, the protocol provision or the preset rule directly stipulates the receiving time of the reference signal. Or the protocol provision or the preset rule stipulates some parameters, and the terminal determines the receiving time of the reference signal based on these stipulated parameters.

In some embodiments, the terminal may also receive configuration information sent by the network device. The configuration information may indicate some parameters, and the terminal determines the receiving time of the reference signal based on the parameters indicated by the configuration information.

The parameters may be any possible parameters required for determining the receiving time of the reference signal, such as a timing advance offset, a timing advance and other parameters, which are not limited in the disclosure.

In step S12, the reference signal is received based on the receiving time.

In some embodiments, the terminal may receive the reference signal at a corresponding time or within a corresponding time period based on the receiving time determined in the step S11.

For example, in the case where the reference signal is a CLI reference signal, the terminal may receive the CLI reference signal at a corresponding time or within a corresponding time period based on the determined receiving time.

Certainly, the above is only for illustration by taking the interference measurement being the CLI measurement as an example, and the above process may also be used for sounding reference signal (SRS) measurement, channel state information reference signal (CSI-RS) measurement, etc. It may be understood that the specific interference measurement performed may depend on the specific form of the reference signal, such as SRS, CSI-RS, etc., which is not limited in the disclosure.

In step S13, an interference measurement is performed.

In some embodiments, the terminal may perform the interference measurement based on the reference signal received in the step S12.

For example, in the case where the reference signal is a CLI reference signal, the terminal may perform the CLI measurement based on the received CLI reference signal.

The disclosure performs the interference measurement by determining the receiving time of a reference signal that has an offset from the downlink slot boundary, thereby improving the interference measurement accuracy and reducing the complexity of the interference measurement.

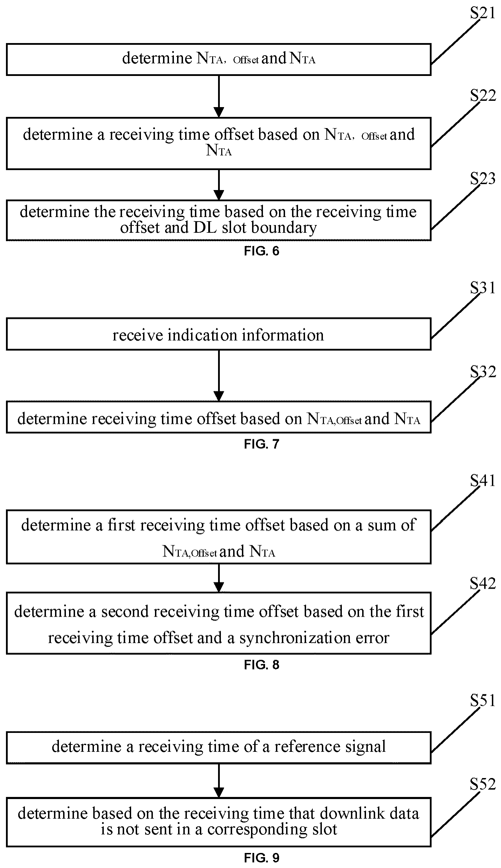

In the interference measurement method according to the embodiments of the disclosure, FIG. 6 is a flowchart illustrating another interference measurement method according to an example embodiment. As illustrated in FIG. 6, determining the receiving time of the reference signal in the step S11 may also include the following.

In step S21, a timing advance offset value and a timing advance value are determined.

In some embodiments, the terminal may determine the timing advance offset value and the timing advance value. The timing advance offset value may be denoted by $N_{TA, \text{offset}}$, and the timing advance value may be denoted by $N_{TA}$, The timing advance offset value $N_{TA, \text{offset}}$ and the timing advance value $N_{TA}$ may be used for describing the TA corresponding to the terminal in the serving cell.

It may be understood that the timing advance offset value $N_{TA, \text{offset}}$ may be a cell-level TA, and the timing advance value $N_{TA}$ may be a terminal-level TA. The "cell-level TA" means that the same TA is used in the same cell. For example, terminal A and terminal B belong to the same serving cell, and the timing advance offset values $N_{TA, \text{offset}}$ used by terminal A and terminal B are the same. The "terminal-level TA" means that different TAs may be used by different terminals. For example, for terminal A and terminal B belonging to the same serving cell, different timing advance values $N_{TA}$ may be used based on the difference in factors such as the location, hardware conditions, and communication environment between the terminals. For a certain terminal, in sending the reference signal for performing the interference measurement, it needs to indicate both the cell-level TA and the terminal-level TA to determine the actual TA. As an example, terminal A needs to refer to the timing advance offset value $N_{TA, off set}$ of the serving cell and the timing advance value $N_{TA}$ of terminal A to determine the actual TA. As another example, terminal B needs to refer to the timing advance offset value $N_{TA, off set}$ of the serving cell and the timing advance value $N_{TA}$ of terminal B to determine the actual TA.

For example, the terminal may determine the timing advance offset value $N_{TA, off set}$ and the timing advance value $N_{TA}$ based on indication information sent by the network device. For example, the terminal receives the configuration information sent by the network device, and the configuration information may include the timing advance offset value $N_{TA, off set}$ and the timing advance value $N_{TA}$. It may be understood that the timing advance offset value $N_{TA, off set}$ and the timing advance value $N_{TA}$ may be indicated by the same configuration information or may be independently indicated by different configuration information, which is not limited in the disclosure.

As another example, the terminal may determine the timing advance offset value $N_{TA, off set}$ and the timing advance value $N_{TA}$ based on a preset rule or a protocol provision.

In step S22, a receiving time offset is determined based on the timing advance offset value $N_{TA, off set}$ and the timing advance value $N_{TA}$.

In some embodiments, the terminal may determine the receiving time offset based on the timing advance offset value $N_{TA, off set}$ and the timing advance value $N_{TA}$ determined in the step S21. It may be understood that the receiving time offset may be used for determining how much time offset the receiving time of the reference signal has generated relative to the DL slot boundary.

In step S23, the receiving time is determined based on the receiving time offset and the DL slot boundary.

In some embodiments, the terminal may determine the receiving time of receiving the reference signal based on the receiving time offset determined in the step S22 and in combination with the DL slot boundary at the terminal.

For example, the receiving time may be a starting time of receiving the reference signal. The terminal starts receiving the reference signal from the starting time and performs the interference measurement.

The disclosure determines the offset between the receiving time and the downlink slot boundary through the timing advance offset value and the timing advance value, to determine the receiving time based on the offset and perform the interference measurement, thereby improving the interference measurement accuracy and reducing the complexity of the interference measurement.

In the interference measurement method according to the embodiments of the disclosure, the receiving time offset includes a first receiving time offset. Determining the receiving time offset based on the timing advance offset value $N_{TA, off set}$ and the timing advance value $N_{TA}$ in the step S22 includes: determining the first receiving time offset based on a sum of the timing advance offset value $N_{TA, off set}$ and the timing advance value $N_{TA}$ multiplied by a first parameter.

In some embodiments, the receiving time offset may include a first receiving time offset. The first receiving time offset may be considered as a receiving time offset without considering a synchronization error between network devices.

In some embodiments, the terminal may determine the first receiving time offset based on the sum of the timing advance offset value $N_{TA, off set}$ and the timing advance value $N_{TA}$ multiplied by the first parameter. It may be understood that "the timing advance value $N_{TA}$ multiplied by the first parameter" may be considered as a whole and is summed with the timing advance offset value $N_{TA, off set}$.

As an example, the sum of the timing advance offset value $N_{TA, off set}$ and the timing advance value $N_{TA}$ multiplied by the first parameter may be directly taken as the first receiving time offset.

As another example, weight coefficients may be determined for the timing advance offset value $N_{TA, off set}$ and the timing advance value $N_{TA}$ multiplied by the first parameter respectively, and the first receiving time offset may be determined based on a sum of the timing advance offset value $N_{TA, off set}$ with the weight coefficient and the timing advance value $N_{TA}$ multiplied by the first parameter with the weight coefficient.

In some embodiments, the terminal may also perform possible algebraic operations based on the timing advance offset value $N_{TA, off set}$ and the timing advance value $N_{TA}$ multiplied by the first parameter. As an example, a squaring operation is performed on one or more of the timing advance offset value $N_{TA, off set}$ and the timing advance value $N_{TA}$ multiplied by the first parameter and then calculate the sum. As another example, a square root operation is performed on one or more of the timing advance offset value $N_{TA, off set}$ and the timing advance value $N_{TA}$ multiplied by the first parameter and then calculate the sum.

Certainly, in some embodiments, the first receiving time offset may also be determined based on a difference between the timing advance offset value $N_{TA, off set}$ and the timing advance value $N_{TA}$ multiplied by the first parameter. Or a squaring operation is performed on one or more of the timing advance offset value $N_{TA, off set}$ and the timing advance value $N_{TA}$ multiplied by the first parameter and then calculate the difference, or a square root operation is performed on one or more of the timing advance offset value $N_{TA, off set}$ and the timing advance value $N_{TA}$ multiplied by the first parameter and then calculate the difference. It may be understood that how to perform algebraic operations on the timing advance offset value $N_{TA, off set}$ and the timing advance value $N_{TA}$ multiplied by the first parameter may be determined based on actual conditions, and the above is not limited in the disclosure.

The disclosure provides a specific implementation for determining the receiving time offset, to determine the receiving time based on the receiving time offset and perform the interference measurement, thereby improving the interference measurement accuracy and reducing the complexity of the interference measurement.

In the interference measurement method according to the embodiments of the disclosure, the serving cell and the neighboring cell belong to heterogeneous networks, the first receiving time offset is $\left(N_{TA,\ offset} + \dfrac{N_{TA}}{2}\right)T_c$ , where the first parameter is $\dfrac{1}{2}$ , or the serving cell and the neighboring cell belong to homogeneous networks, the first receiving time offset is $(N_{TA,\ offset} + N_{TA})T_c$, where the first parameter is 1 and $T_c$ is a basic time value.

In some embodiments, the terminal may not consider the synchronization error between network devices of different cells or may consider that the synchronization error is 0. The synchronization error between network devices of different cells may be the synchronization error between the network device of the serving cell and the network device of the neighboring cell. In the case where the serving cell and the neighboring cell belong to heterogeneous networks (HetNet), the terminal may determine the first receiving time offset as $\left(N_{TA,\ offset} + \dfrac{N_{TA}}{2}\right)T_c$ , where the first parameter is $\dfrac{1}{2}$ , and $T_c$ denotes the basis time value.

For example, in the case where the serving cell and the neighboring cell belong to HetNet, the first receiving time offset from the receiving time of receiving the reference signal by the terminal to the DL slot boundary may be $\left(N_{TA,\ offset} + \dfrac{N_{TA}}{2}\right)T_c$ , where the first parameter is $\dfrac{1}{2}$ , and $T_c$ denotes the basic time value. It may be understood that $T_c$ may be preset or specified by the protocol, indicating a unit time. For example, $T_c$ is 1ms, 5μs, etc.

The HetNet indicates the coexistence of an urban macro cell and a micro cell. In this case, considering different communication requirements, the urban macro cell usually corresponds to TDD UL/DL configurations dominated by DL, while the micro cell corresponds to TDD UL/DL configurations dominated by UL. The time offset $T_{offset} = N_{TA,\ offset} T_c + T_1 + T_2 - T_3$, where $T_{offset}$ represents the time offset, and $N_{TA,\ offset}$ is the cell-level TA information configured for the aggressor terminal. Considering that a distance between the victim terminal and the aggressor terminal that are mutually interfered with each other is close, for example the victim terminal and the aggressor terminal are both near the cell boundary, the propagation delay $T_3$ between the terminals may be ignored. In other words, $T_3$ may be regarded as 0. Furthermore, assuming that the neighboring cell where the aggressor terminal is located is a micro cell, the distance between the aggressor terminal and the network device of the neighboring cell will also be relatively close, such as about tens of meters. For electromagnetic wave signals with a propagation speed close to the speed of light, the propagation delay from the aggressor terminal to the network device of the neighboring cell corresponding to $T_2$ may also be ignored. Then, $T_{offset}$ may be approximately regarded as $T_{offset} = N_{TA,\ offset} T_c + T_1$, where $T_1$ may be regarded as $T_1 = \dfrac{N_{TA}}{2} T_c$ . That is, $N_{TA} T_c$ represents a round-trip delay between the victim terminal and the base station in the serving cell. Furthermore, $T_{offset} = N_{TA,\ offset} T_c + T_1$ may be further simplified to $T_{offset} = \left(N_{TA,\ offset} + \dfrac{N_{TA}}{2}\right)T_c$ . It may be seen that the first parameter is $\dfrac{1}{2}$ .

In some embodiments, the terminal may not consider the synchronization error between network devices of different cells or may consider that the synchronization error is 0. The synchronization error between network devices of different cells may be the synchronization error between the network device of the serving cell and the network device of the neighboring cell. In the case where the serving cell and the neighboring cell belong to homogeneous networks, for example, in a seamless bidirectional forwarding detection (SBFD) scenario, the terminal may determine that the first receiving time offset is $(N_{TA,\ offset} + N_{TA})T_c$, where the first parameter is 1, and $T_c$ denotes the basic time value.

For example, in the case where the serving cell and the neighboring cell belong to homogeneous networks, such as in the SBFD scenario, the first receiving time offset from the receiving time of receiving the reference signal by the terminal to the DL slot boundary may be $(N_{TA,\ offset} + N_{TA})T_c$, where the first parameter is 1, and $T_c$ denotes the basic time value. It may be understood that $T_c$ may be preset or specified by the protocol, indicating a unit time. For example, $T_c$ is 1ms, 5μs, etc.

The homogeneous networks may be considered that the serving cell and the neighboring cell have the same structure, configuration, or the like. Taking the homogeneous networks as an SBFD scenario as an example, in this case, it is assumed that the advanced terminal supporting the SBFD feature supports configuring the UL subband in the DL slot and transmitting uplink data with the UL subband. The advanced terminal may be considered as the victim terminal mentioned above. For the legacy UE that does not support the SBFD feature, the legacy UE transmits downlink data normally in the DL slot. The legacy terminal may be considered as the aggressor terminal mentioned above. The uplink data sent by the corresponding advanced UE will interfere with the downlink reception of the legacy UE. It may be understood that the advanced terminal and the legacy terminal may be in the same cell or different cells.

The time offset is $T_{\text{offset}} = N_{TA,\,\text{offset}} T_c + T_1 + T_2 - T_3$, where $T_{\text{offset}}$ represents the time offset, and $N_{TA,\,\text{offset}}$ is the cell-level TA information configured for the aggressor terminal. Considering that the distance between the victim terminal and the aggressor terminal that are mutually interfered with each other is relatively close, for example the victim terminal and the aggressor terminal are both near the cell boundary, the propagation delay $T_3$ between the terminals may be ignored. In other words, $T_3$ may be regarded as 0. In addition, it is assumed that the aggressor terminal and the victim terminal are located at the edge of the cell. The delay between the aggressor terminal and the network device of the neighboring cell is approximately the same as the delay between the victim terminal and the network device of the neighboring cell. In other words, $T_2 \approx T_1$. $T_{\text{offset}}$ may be approximately regarded as $T_{\text{offset}} = N_{TA,\,\text{offset}} T_c + 2T_1$, where $T_1$ may be regarded as $T_1 = \dfrac{N_{TA}}{2} T_c$ . In other words, $N_{TA} T_c$ represents a round-trip delay between the victim terminal and the base station in the serving cell. Then $T_{\text{offset}} = N_{TA,\,\text{offset}} T_c + 2T_1$ may be further simplified to $T_{\text{offset}} = (N_{TA,\,\text{offset}} + N_{TA}) T_c$. It may be seen that the first parameter is 1.

The disclosure provides a method for determining the receiving time offset under different network structures, to determine the receiving time based on the receiving time offset and perform the interference measurement, thereby improving the interference measurement accuracy and reducing the complexity of the interference measurement.

In the interference measurement method according to the embodiments of the disclosure, the receiving time offset includes a second receiving time offset. FIG. 7 is a flowchart illustrating another interference measurement method according to an example embodiment. As illustrated in FIG. 7, the method may further include the following.

In step S31, indication information is received.

In some embodiments, the receiving time offset may include the second receiving time offset. The second receiving time offset may be considered as a receiving time offset with considering a synchronization error between network devices.

In some embodiments, the terminal may receive the indication information sent by a network device. The indication information may be used for indicating a synchronization error between a first network device in a serving cell and a second network device in a neighboring cell.

For example, considering the synchronization error between network devices in different cells, the synchronization error may be measured by the network device and indicated to the terminal via the indication information. For example, the first network device in the serving cell performs the measurement by receiving the reference signal sent by the second network device in the neighboring cell to determine the synchronization error between different network devices. The synchronization error may be denoted as $\Delta_{\text{max}}$.

For example, in the Rel-18 DTDD scenario, in addition to supporting the UE-to-UE CLI measurement, gNB-to-gNB CLI measurements may also be supported. That is, the aggressor network device sends the corresponding reference signal, and the victim network device receives the corresponding reference signal and performs the interference measurement. Therefore, the situation where there is the synchronization error $\Delta_{\text{max}}$ between different network devices may be considered.

For example, the indication information may also carry an identifier of a network device. The identifier may be an identity (ID) or an index.

In some implementations, determining the receiving time offset based on the timing advance offset value $N_{TA,\,\text{offset}}$ and the timing advance value $N_{TA}$ in the step S22 may further include the following.

In step S32, a second receiving time offset is determined based on the timing advance offset value $N_{TA,\,\text{offset}}$, the timing advance value $N_{TA}$ and the synchronization error.

In some embodiments, the terminal may determine the second receiving time offset based on the timing advance offset value $N_{TA,\,\text{offset}}$, the timing advance value $N_{TA}$ and the synchronization error $\Delta_{\text{max}}$,

It may be understood that the second receiving time offset may be determined based on the first receiving time offset in combination with the synchronization error $\Delta_{\text{max}}$.

The disclosure determines the offset between the receiving time and the downlink slot boundary through the timing advance offset value, the timing advance value and the synchronization error, to determine the receiving time based on the offset and perform the interference measurement, thereby improving the interference measurement accuracy and reducing the complexity of the interference measurement.

In the interference measurement method according to the embodiments of the disclosure, the receiving time offset also includes the first receiving time offset. FIG. 8 is a flowchart illustrating another interference measurement method according to an example embodiment. As illustrated in FIG. 8, determining the second receiving time offset based on the timing advance offset value $N_{TA, \text{ off set}}$, the timing advance value $N_{TA}$ and the synchronization error in the step S32 may also include the following.

In step S41, the first receiving time offset is determined based on a sum of the timing advance offset value $N_{TA, \text{ off set}}$ and the timing advance value $N_{TA}$ multiplied by the first parameter.

In some embodiments, the terminal may determine the first receiving time offset based on the sum of the timing advance offset value $N_{TA, \text{ off set}}$ and the timing advance value $N_{TA}$ multiplied by the first parameter. It may be understood that "the timing advance value $N_{TA}$ multiplied by the first parameter" may be considered as a whole and is summed with the timing advance offset value $N_{TA, \text{ off set}}$.

As an example, the sum of the timing advance offset value $N_{TA, \text{ off set}}$ and the timing advance value $N_{TA}$ multiplied by the first parameter may be directly taken as the first receiving time offset.

As another example, weight coefficients may be determined for the timing advance offset value $N_{TA, \text{ off set}}$ and for the timing advance value $N_{TA}$ multiplied by the first parameter respectively, and the first receiving time offset may be determined based on a sum of the timing advance offset value $N_{TA, \text{ off set}}$ with the weight coefficient and the timing advance value $N_{TA}$ multiplied by the first parameter with the weight coefficient.

In some embodiments, the terminal may also perform possible algebraic operations based on the timing advance offset value $N_{TA, \text{ off set}}$ and the timing advance value $N_{TA}$ multiplied by the first parameter. As an example, a squaring operation is performed on one or more of the timing advance offset value $N_{TA, \text{ off set}}$ and the timing advance value $N_{TA}$ multiplied by the first parameter and then calculate the sum. As another example, a square root operation is performed on one or more of the timing advance offset value $N_{TA, \text{ off set}}$ and the timing advance value $N_{TA}$ multiplied by the first parameter and then calculate the sum.

In step S42, a second receiving time offset is determined based on a sum of the first receiving time offset and the synchronization error.

In some embodiments, the terminal may determine the second receiving time offset based on the sum of the first receiving time offset determined in the step S41 and the synchronization error $\Delta_{\text{max}}$.

As an example, the sum of the first receiving time offset and the synchronization error $\Delta_{\text{max}}$ is directly used as the second receiving time offset.

As another example, weight coefficients may be determined for the first receiving time offset and the synchronization error respectively, and the second receiving time offset may be determined based on a sum of the first receiving time offset with the weight coefficient and the synchronization error with the weight coefficient.

The disclosure provides a specific implementation for determining the receiving time offset, to determine the receiving time based on the receiving time offset and perform the interference measurement, thereby improving the interference measurement accuracy and reducing the complexity of the interference measurement.

In the interference measurement method according to the embodiments of the disclosure, the serving cell where the terminal is located and the neighboring cell belong to heterogeneous networks, the second receiving time offset is

$$\left( N_{TA, \text{ offset}} + \frac{N_{TA}}{2} \right) T_c + \Delta_{\text{max}}$$, where the first parameter is $\frac{1}{2}$, or the serving cell where the terminal is located and the neighboring cell belong to homogeneous networks, the second receiving time offset is $(N_{TA, \text{ offset}} + N_{TA})T_c + \Delta_{\text{max}}$, where the first parameter is 1, $T_c$ denotes the basic time value, and $\Delta_{\text{max}}$ denotes the synchronization error.

In some embodiments, the terminal may consider the synchronization error between network devices in different cells. The synchronization error between network devices in different cells may be the synchronization error between the network device of the serving cell and the network device of the neighboring cell. In the case where the serving cell and the neighboring cell belong to HetNet, the terminal may determine the second receiving time offset as

$$\left( N_{TA, \text{ offset}} + \frac{N_{TA}}{2} \right) T_c + \Delta_{\text{max}}$$, where the first parameter is $\frac{1}{2}$, $T_c$ denotes the basic time value, and $\Delta_{\text{max}}$ denotes the synchronization error.

For example, in the case where the serving cell and the neighboring cell belong to HetNet, the second receiving time offset from the receiving time of receiving the reference signal by the terminal to the DL slot boundary may be

$$\left( N_{TA, \text{ offset}} + \frac{N_{TA}}{2} \right) T_c + \Delta_{\text{max}}$$, where the first parameter is $\frac{1}{2}$ and $T_c$ denotes the basic time value. It may be understood that $T_c$ may be preset or specified by a protocol, representing a unit time. For example, $T_c$ is 1ms, 5μs, etc.

It may be understood that for the specific determination process of $\left( N_{TA,\ off set} + \dfrac{N_{TA}}{2} \right) T_c$ , reference may be made to the description of the aforementioned embodiments, and which is not described in the disclosure.

In some embodiments, the terminal may consider the synchronization error between network devices in different cells. The synchronization error between network devices in different cells may be the synchronization error between the network device of the serving cell and the network device of the neighboring cell. In the case where the serving cell and the neighboring cell belong to homogeneous networks, for example, in the SBFD scenario, the terminal may determine the second receiving time $_{off set} (N_{TA,\ off set} + N_{TA})T_c + \Delta_{max}$, where the first parameter is 1, $T_c$ denotes the time base value, and $\Delta_{max}$ denotes the synchronization error.

It may be understood that for the specific determination process of $(N_{TA,\ off set} + N_{TA})T$, reference may be made to the description of the aforementioned embodiments, which is not described in the disclosure.

The disclosure provides a method for determining the receiving time offset under different network structures, to determine the receiving time based on the receiving time offset and perform the interference measurement, thereby improving the interference measurement accuracy and reducing the complexity of the interference measurement.

In the interference measurement method according to the embodiments of the disclosure, the timing advance offset value $N_{TA,\ off set}$ is configured for a terminal of the neighboring cell, or the timing advance offset value $N_{TA,\ off set}$ is configured for the terminal.

In some embodiments, the timing advance offset value $N_{TA,\ off set}$ may be configured for the terminal of the neighboring cell.

For example, the terminal may receive indication information sent by the network device. The indication information may indicate the timing advance offset value $N_{TA,\ off set}$ configured for the terminal in the neighboring cell. The indication information may be the same as or different from the indication information for indicating the synchronization error $\Delta_{max}$.

Certainly, the timing advance value $N_{TA}$ may also be determined based on the indication information sent by the network device. The indication information may be the same as one or more of the indication information for indicating the timing advance offset value $N_{TA,\ off set}$ or the indication information for indicating the synchronization error $\Delta_{max}$ ; or the indication information may be different from the indication information for indicating the timing advance offset value $N_{TA,\ off set}$ and the indication information for indicating the synchronization error $\Delta_{max}$.

As another example, the terminal may determine the timing advance offset value $N_{TA,\ off set}$ configured for the terminal in the neighboring cell based on a predefined rule or a protocol provision.

Certainly, the timing advance value $N_{TA}$ may also be determined based on a predefined rule or a protocol provision.

It may be understood that no matter whether the first receiving time offset or the second receiving time offset is determined, it may be ensured that the determined receiving time is more accurate by determining the timing advance offset value $N_{TA,\ off set}$ for the neighboring cell.

In some embodiments, the terminal may determine that the timing advance offset value $N_{TA,\ off set}$ may be configured for the terminal of the serving cell.

For example, assuming that in the DTDD scenario, DTDD mainly studies the interference measurement at the co-channel level, such as the CLI at the co-channel level, the corresponding cell where the aggressor terminal is located and the cell where the victim terminal is located are in the same carrier range. The cell-level $N_{TA,\ off set}$ is used for the preparation time for uplink and downlink switching of network device in the cell. It is mainly related to the TDD or frequency division duplex (FDD) standard and the frequency band where the cell is located. In the DTDD scenario, since the serving cell and the neighboring cell are in the same carrier range, the bands are the same. Based on the above situation, it may be considered that the cell-level $N_{TA,\ off set}$ at the aggressor terminal is the same as the cell-level $N_{TA,\ off set}$ at the victim terminal.

Therefore, considering that in some cases where the terminal may not be able to obtain or know the cell-level $N_{TA,\ off set}$ at the aggressor terminal, the cell-level $N_{TA,\ off set}$ at the victim terminal may be used to replace the cell-level $N_{TA,\ off set}$ at the aggressor terminal.

The disclosure replaces the cell-level TA for the neighboring cell with the cell-level TA for the serving cell to determine the receiving time offset, such that the receiving time is determined based on the receiving time offset and the interference measurement is performed, thereby improving the interference measurement accuracy and reducing the complexity of the interference measurement.

Based on the same concept, the disclosure also provides an interference measurement method performed by a network device.

FIG. 9 is a flowchart illustrating another interference measurement method according to an example embodiment. As illustrated in FIG. 9, the method is performed by a network device, and the method may include the following.

In step S51, a receiving time of a reference signal is determined.

In some embodiments, the network device determines the receiving time of the reference signal. There is an offset between the receiving time and a DL slot boundary. The DL slot may be considered as the starting time position of receiving, by the terminal of the serving cell, the downlink data sent by the network device.

For example, for each reference signal, the network device may determine a respective receiving time of the reference signal. For example, the reference signal may be a CLI reference signal used to perform CLI measurement. For example, when the victim terminal performs CLI measurement with aggressor terminals of different neighboring cells, the network device needs to separately determine the respective receiving time of the reference signal sent by each aggressor terminal to the victim terminal.

It may be understood that the offsets between the receiving times of different reference signals and the DL slot boundary of the terminal may be different.

In some embodiments, the network device may determine the receiving time of the reference signal based on a protocol provision or a preset rule. For example, the protocol provision or the preset rule directly stipulates the receiving time of the reference signal. Or the protocol provision or the preset rule stipulates some parameters, and the network device determines the receiving time of the reference signal based on the stipulated parameters.

The parameters may be any possible parameters required for determining the receiving time of the reference signal, such as timing advance offset, timing advance and other parameters, which are not limited in the disclosure.

In step S52, it is determined based on the receiving time that downlink data is not sent in a corresponding slot.

In some embodiments, the network device may determine not to send downlink data in the corresponding slot based on the receiving time determined in the step S51.

It may be understood that after determining the receiving time when the terminal may perform the interference measurement, the network device may determine not to send the downlink data in the corresponding slot to avoid affecting and interfering with the terminal's reception of the reference signal. The terminal receives the reference signal at the corresponding time or within the corresponding time period and performs the interference measurement based on the received reference signal.

For example, in the case where the reference signal is a CLI reference signal, the terminal may receive the CLI reference signal at a corresponding time or within a corresponding time period based on the determined receiving time and perform the CLI measurement based on the received CLI reference signal.

Certainly, the above is only for illustration by taking the interference measurement being the CLI measurement as an example, and the above process may also be used for sounding reference signal (SRS) measurement, channel state information reference signal (CSI-RS) measurement, etc. It may be understood that the specific interference measurement performed may depend on the specific form of the reference signal, such as SRS, CSI-RS, etc., which is not limited in the disclosure.

In some embodiments, the network device may also send the receiving time. For example, the network device may send configuration information for indicating the receiving time. The configuration information may indicate some parameters or directly indicate the receiving time. The terminal determines the receiving time of the reference signal based on the parameters indicated by the configuration information or based on the indicated receiving time. The terminal receives the reference signal at the receiving time and performs the interference measurement.

The disclosure performs the interference measurement by determining the receiving time of the reference signal that is offset from the downlink slot boundary, thereby improving the interference measurement accuracy and reducing the complexity of the interference measurement.

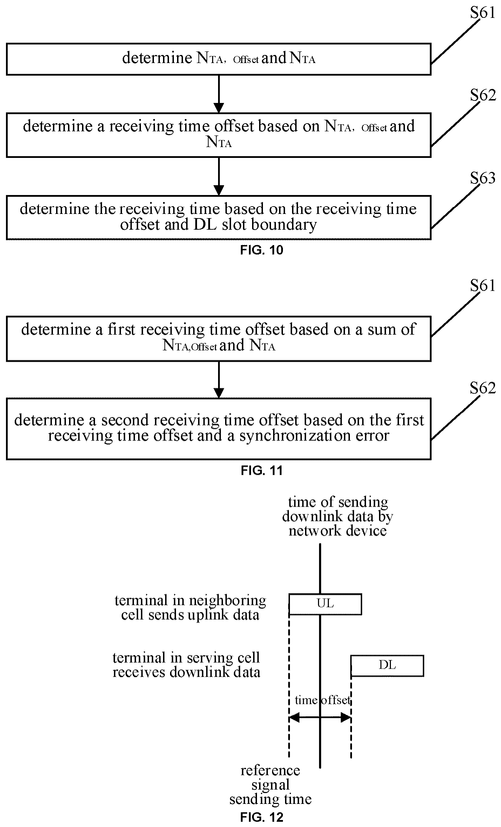

In the interference measurement method according to the embodiments of the disclosure, FIG. 10 is a flowchart illustrating another interference measurement method according to an example embodiment. As illustrated in FIG. 10, determining the receiving time of the reference signal in the step S51 may further include the following.

In step S61, a timing advance offset value and a timing advance value are determined.

In some embodiments, the network device may determine the timing advance offset value and the timing advance value. The timing advance offset value may be denoted by $N_{TA, \text{offset}}$, and the timing advance value may be denoted by $N_{TA}$. The timing advance offset value $N_{TA, \text{offset}}$ and the timing advance value $N_{TA}$ may be used for describing the TA corresponding to the terminal in the serving cell.

It may be understood that the timing advance offset value $N_{TA, \text{offset}}$ may be a cell-level TA, and the timing advance value $N_{TA}$ may be a terminal-level TA. The "cell-level TA" means that the same TA is used in the same cell. For example, terminal A and terminal B belong to the same serving cell, and the timing advance offset values $N_{TA, \text{offset}}$ used by terminal A and terminal B are the same. The "terminal-level TA" means that different TAs may be used by different terminals. For example, for terminal A and terminal B belonging to the same serving cell, different timing advance values $N_{TA}$ may be used based on the difference in factors such as the location, hardware conditions, and communication environment between the terminals. For a certain terminal, in sending the reference signal for performing the interference measurement, it needs to indicate both the cell-level TA and the terminal-level TA to determine the actual TA. As an example, terminal A needs to refer to the timing advance offset value $N_{TA, \text{offset}}$ of the serving cell and the timing advance value $N_{TA}$ of terminal A to determine the actual TA. As another example, terminal B needs to refer to the timing advance offset value $N_{TA, \text{offset}}$ of the

serving cell and the timing advance value $N_{TA}$ of terminal B to determine the actual TA.

For example, the network device may determine the timing advance offset value $N_{TA, off set}$ and the timing advance value $N_{TA}$ based on a preset rule or a protocol provision.

As another example, the network device may send indication information for indicating the timing advance offset value $N_{TA, offset}$ and the timing advance value $N_{TA}$. *For* example, the network device sends configuration information, which may include the timing advance offset value $N_{TA, off set}$ and the timing advance value $N_{TA}$. *It* may be understood that the timing advance offset value $N_{TA, off set}$ and the timing advance value $N_{TA}$ may be indicated by the same configuration information or may be independently indicated by different configuration information, which is not limited in the disclosure.

In step S62, the receiving time offset is determined based on the timing advance offset value $N_{TA, off set}$ and the timing advance value $N_{TA}$.

In some embodiments, the network device may determine the receiving time offset based on the timing advance offset value $N_{TA, offset}$ and the timing advance value $N_{TA}$ determined in the step S61. It may be understood that the receiving time offset may be used for determining how much time offset the receiving time of the reference signal has generated relative to the DL slot boundary.

In step S63, the receiving time is determined based on the receiving time offset and the DL slot boundary.

In some embodiments, the network device may determine the receiving time of receiving the reference signal based on the receiving time offset determined in the step S62 in combination with the DL slot boundary.

For example, the receiving time may be a starting time of receiving the reference signal, such that the terminal starts receiving the reference signal from the starting time and performs the interference measurement..

The disclosure determines the offset between the receiving time and the downlink slot boundary through the timing advance offset value and the timing advance value, to determine the receiving time based on the offset and perform the interference measurement, thereby improving the interference measurement accuracy and reducing the complexity of the interference measurement.

In the interference measurement method according to the embodiments of the disclosure, the receiving time offset includes a first receiving time offset. Determining the receiving time offset based on the timing advance offset value $N_{TA, off set}$ and the timing advance value $N_{TA}$ in the step S62 includes: determining the first receiving time offset based on a sum of the timing advance offset value $N_{TA, of f set}$ and the timing advance value $N_{TA}$ multiplied by a first parameter.

In some embodiments, the receiving time offset may include a first receiving time offset. The first receiving time offset may be considered as a receiving time offset without considering a synchronization error between network devices.

In some embodiments, the terminal may determine the first receiving time offset based on the sum of the timing advance offset value $N_{TA, off set}$ and the timing advance value $N_{TA}$ multiplied by the first parameter. It may be understood that "the timing advance value $N_{TA}$ multiplied by the first parameter" may be considered as a whole and is summed with the timing advance offset value $N_{TA, off set}$.

As an example, the sum of the timing advance offset value $N_{TA, offset}$ and the timing advance value $N_{TA}$ multiplied by the first parameter may be directly taken as the first receiving time offset.

As another example, weight coefficients may be determined for the timing advance offset value $N_{TA, offset}$ and the timing advance value $N_{TA}$ multiplied by the first parameter respectively, and the first receiving time offset may be determined based on a sum of the timing advance offset value $N_{TA, off set}$ with the weight coefficient and the timing advance value $N_{TA}$ multiplied by the first parameter with the weight coefficient.

In some embodiments, the network device may also perform possible algebraic operations based on the timing advance offset value $N_{TA, off set}$ and the timing advance value $N_{TA}$ multiplied by the first parameter. As an example, a squaring operation is performed on one or more of the timing advance offset value $N_{TA, offset}$ and the timing advance value $N_{TA}$ multiplied by the first parameter and then calculate the sum. As another example, a square root operation is performed on one or more of the timing advance offset value $N_{TA, off set}$ and the timing advance value $N_{TA}$ multiplied by the first parameter and then calculate the sum.

Certainly, in some embodiments, the first receiving time offset may also be determined based on a difference between the timing advance offset value $N_{TA, offset}$ and the timing advance value $N_{TA}$ multiplied by the first parameter. Or a squaring operation is performed on one or more of the timing advance offset value $N_{TA, offset}$ and the timing advance value $N_{TA}$ multiplied by the first parameter and then calculate the difference, or a square root operation is performed on one or more of the timing advance offset value $N_{TA, of f set}$ and the timing advance value $N_{TA}$ multiplied by the first parameter and then calculate the difference. It may be understood that how to perform algebraic operations on the timing advance offset value $N_{TA, off set}$ and the timing advance value $N_{TA}$ multiplied by the first parameter may be determined based on actual conditions, and the above is not limited in the disclosure.

The disclosure provides a specific implementation for determining the receiving time offset, to determine the receiving time based on the receiving time offset and perform the interference measurement, thereby improving the interference measurement accuracy and reducing the complexity of the interference measurement.

In the interference measurement method according to the embodiments of the disclosure, the serving cell and the neighboring cell belong to heterogeneous networks, the first receiving time offset is $\left( N_{TA,\ offset} + \dfrac{N_{TA}}{2} \right) T_c$ , where the first parameter is $\dfrac{1}{2}$ , or the serving cell and the neighboring cell belong to homogeneous networks, the first receiving time offset is $(N_{TA,\ offset} + N_{TA})T_c$, where the first parameter is 1 and $T_c$ is a basic time value.

In some embodiments, the network device may not consider the synchronization error between network devices of different cells or may consider that the synchronization error is 0. The synchronization error between network devices of different cells may be the synchronization error between the network device of the serving cell and the network device of the neighboring cell. In the case where the serving cell and the neighboring cell belong to heterogeneous networks (HetNet), the network device may determine the first receiving time offset as $\left( N_{TA,\ offset} + \dfrac{N_{TA}}{2} \right) T_c$ , where the first parameter is $\dfrac{1}{2}$ , and $T_c$ denotes the basis time value.

For example, in the case where the serving cell and the neighboring cell belong to HetNet, the first receiving time offset from the receiving time of receiving the reference signal by the terminal to the DL slot boundary may be $\left( N_{TA,\ offset} + \dfrac{N_{TA}}{2} \right) T_c$ , where the first parameter is $\dfrac{1}{2}$ , and $T_c$ denotes the basic time value. It may be understood that T may be preset or specified by the protocol, indicating a unit time. For example, $T_c$ is 1ms, 5μs, etc.

The HetNet indicates the coexistence of an urban macro cell and a micro cell. In this case, considering different communication requirements, the urban macro cell usually corresponds to TDD UL/DL configurations dominated by DL, while the micro cell corresponds to TDD UL/DL configurations dominated by UL. The time offset $T_{offset} = N_{TA,\ offset}T_c + T_1 + T_2 - T_3$, where $T_{offset}$ represents the time offset, and $N_{TA,\ offset}$ is the cell-level TA information configured for the aggressor terminal. Considering that a distance between the victim terminal and the aggressor terminal that are mutually interfered with each other is close, for example the victim terminal and the aggressor terminal are both near the cell boundary, the propagation delay $T_3$ between the terminals may be ignored. In other words, $T_3$ may be regarded as 0. Furthermore, assuming that the neighboring cell where the aggressor terminal is located is a micro cell, the distance between the aggressor terminal and the network device of the neighboring cell will also be relatively close, such as about tens of meters. For electromagnetic wave signals with a propagation speed close to the speed of light, the propagation delay from the aggressor terminal to the network device of the neighboring cell corresponding to $T_2$ may also be ignored. Then, $T_{offset}$ may be approximately regarded as $T_{offset} = N_{TA,\ offset}T_c + T_1$, where $T_1$ may be regarded as $T_1 = \dfrac{N_{TA}}{2} T_c$ . That is, $N_{TA}T_c$ represents a round-trip delay between the victim terminal and the base station in the serving cell. Furthermore, $T_{offset} = N_{TA,\ offset} T_c + T$ may be further simplified to $T_{offset} = \left( N_{TA,\ offset} + \dfrac{N_{TA}}{2} \right) T_c$ . It may be seen that the first parameter is $\dfrac{1}{2}$

In some embodiments, the network device may not consider the synchronization error between network devices of different cells or may consider that the synchronization error is 0. The synchronization error between network devices of different cells may be the synchronization error between the network device of the serving cell and the network device of the neighboring cell. In the case where the serving cell and the neighboring cell belong to homogeneous networks, for example, in a seamless bidirectional forwarding detection (SBFD) scenario, the network device may determine that the first receiving time offset is $(N_{TA,\ off\ set} + N_{TA})T_c$, where the first parameter is 1, and $T_c$ denotes the basic time value.

For example, in the case where the serving cell and the neighboring cell belong to homogeneous networks, such as in the SBFD scenario, the first receiving time offset from the receiving time of receiving the reference signal by the terminal to the DL slot boundary may be $(N_{TA,\ offset} + N_{TA})T_c$, where the first parameter is 1, and $T_c$ denotes the basic time value. It may be understood that $T_c$ may be preset or specified by the protocol, indicating a unit time. For example, $T_c$ is 1ms, 5μs, etc.

The homogeneous networks may be considered that the serving cell and the neighboring cell have the same structure, configuration, or the like. Taking the homogeneous networks as an SBFD scenario as an example, in this case, it is assumed that the advanced terminal supporting the SBFD feature supports configuring the UL subband in the DL slot and transmitting uplink data with the UL subband. The advanced terminal may be considered as the victim terminal mentioned above. For the legacy UE that does not support the SBFD feature, the legacy UE transmits downlink data normally in the DL slot. The legacy terminal may be considered as the aggressor terminal mentioned above. The uplink data sent by the corresponding advanced UE will interfere with the downlink reception of the legacy UE. It may be understood that the advanced terminal and the legacy terminal may be in the same cell or different cells.

The time offset is $T_{\text{offset}} = N_{TA, \text{offset}} T_c + T + T_2 - T_3$, where $T_{\text{offset}}$ represents the time offset, and $N_{TA, \text{offset}}$ is the cell-level TA information configured for the aggressor terminal. Considering that the distance between the victim terminal and the aggressor terminal that are mutually interfered with each other is relatively close, for example the victim terminal and the aggressor terminal are both near the cell boundary, the propagation delay $T_3$ between the terminals may be ignored. In other words, $T_3$ may be regarded as 0. In addition, it is assumed that the aggressor terminal and the victim terminal are located at the edge of the cell. The delay between the aggressor terminal and the network device of the neighboring cell is approximately the same as the delay between the victim terminal and the network device of the neighboring cell. In other words, $T_2 \approx T_1$. $T_{\text{offset}}$ may be approximately regarded as $T_{\text{offset}} = N_{TA, \text{offset}} T_c + 2T_1$, where $T_1$

may be regarded as $T_1 = \dfrac{N_{TA}}{2} T_c$. In other words, $N_{TA} T_c$ represents a round-trip delay between the victim terminal and the base station in the serving cell. Then $T_{\text{offset}} = N_{TA, \text{offset}} T_c + 2T_1$ may be further simplified to $T_{\text{offset}} = (N_{TA, \text{offset}} + N_{TA}) T_c$. It may be seen that the first parameter is 1.

The disclosure provides a method for determining the receiving time offset under different network structures, to determine the receiving time based on the receiving time offset and perform the interference measurement, thereby improving the interference measurement accuracy and reducing the complexity of the interference measurement.

In the interference measurement method according to the embodiments of the disclosure, the receiving time offset includes a second receiving time offset. The method may further include: sending indication information.

In some embodiments, the receiving time offset may include the second receiving time offset. The second receiving time offset may be considered as a receiving time offset with considering a synchronization error between network devices.

In some embodiments, the network device may send the indication information. The indication information may be used for indicating a synchronization error between a first network device of a serving cell and a second network device of a neighboring cell.

For example, considering the synchronization error between network devices in different cells, the synchronization error may be measured by the network device and indicated to the terminal via the indication information. For example, the first network device in the serving cell performs the measurement by receiving the reference signal sent by the second network device in the neighboring cell to determine the synchronization error between different network devices. The synchronization error may be denoted as $\Delta_{\text{max}}$.

For example, in the Rel-18 DTDD scenario, in addition to supporting the UE-to-UE CLI measurement, gNB-to-gNB CLI measurements may also be supported. That is, the aggressor network device sends the corresponding reference signal, and the victim network device receives the corresponding reference signal and performs the interference measurement. Therefore, the situation where there is the synchronization error $\Delta_{\text{max}}$ between different network devices may be considered.

For example, the indication information may also carry an identifier of a network device. The identifier may be an identity (ID) or an index.

In some implementations, determining the receiving time offset based on the timing advance offset value $N_{TA, \text{offset}}$ and the timing advance value $N_{TA}$ in the step S62 may further include determining the second receiving time offset based on the timing advance offset value $N_{TA, \text{offset}}$, the timing advance value $N_{TA}$ and the synchronization error.

In some embodiments, the network device may determine the second receiving time offset based on the timing advance offset value $N_{TA, \text{offset}}$, the timing advance value $N_{TA}$ and the synchronization error $\Delta_{\text{max}}$.

It may be understood that the second receiving time offset may be determined based on the first receiving time offset in combination with the synchronization error $\Delta_{\text{max}}$.

The disclosure determines the offset between the receiving time and the downlink slot boundary through the timing advance offset value, the timing advance value and the synchronization error, to determine the receiving time based on the offset and perform the interference measurement, thereby improving the interference measurement accuracy and reducing the complexity of the interference measurement.

In the interference measurement method according to the embodiments of the disclosure, the receiving time offset also includes the first receiving time offset. FIG. 11 is a flowchart illustrating another interference measurement method according to an example embodiment. As illustrated in FIG. 11, determining the second receiving time offset based on the timing advance offset value $N_{TA, \text{offset}}$, the timing advance value $N_{TA}$ and the synchronization error may also include the following.

In step S61, a first receiving time offset is determined based on a sum of the timing advance offset value $N_{TA, \text{offset}}$

and the timing advance value $N_{TA}$ multiplied by the first parameter.

In some embodiments, the network device may determine the first receiving time offset based on the sum of the timing advance offset value $N_{TA, off set}$ and the timing advance value $N_{TA}$ multiplied by the first parameter. It may be understood that "the timing advance value $N_{TA}$ multiplied by the first parameter" may be considered as a whole and is summed with the timing advance offset value $N_{TA, off set}$.

As an example, the sum of the timing advance offset value $N_{TA, offset}$ and the timing advance value $N_{TA}$ multiplied by the first parameter may be directly taken as the first receiving time offset.

As another example, weight coefficients may be determined for the timing advance offset value $N_{TA, off set}$ and for the timing advance value $N_{TA}$ multiplied by the first parameter respectively, and the first receiving time offset may be determined based on a sum of the timing advance offset value $N_{TA, off set}$ with the weight coefficient and the timing advance value $N_{TA}$ multiplied by the first parameter with the weight coefficient.

In some embodiments, the network device may also perform possible algebraic operations based on the timing advance offset value $N_{TA, off set}$ and the timing advance value $N_{TA}$ multiplied by the first parameter. As an example, a squaring operation is performed on one or more of the timing advance offset value $N_{TA, offset}$ and the timing advance value $N_{TA}$ multiplied by the first parameter and then calculate the sum. As another example, a square root operation is performed on one or more of the timing advance offset value $N_{TA, off set}$ and the timing advance value $N_{TA}$ multiplied by the first parameter and then calculate the sum.

In step S62, the second receiving time offset is determined based on a sum of the first receiving time offset and the synchronization error.

In some embodiments, the network device may determine the second receiving time offset based on the sum of the first reception time offset determined in the step S61 and the synchronization error $\Delta_{max}$.

As an example, the sum of the first receiving time offset and the synchronization error $\Delta_{max}$ is directly used as the second receiving time offset.

As another example, weight coefficients may be determined for the first receiving time offset and the synchronization error $\Delta_{max}$ respectively, and the second receiving time offset may be determined based on a sum of the first receiving time offset with the weight coefficient and the synchronization error with the weight coefficient $\Delta_{max}$.

The disclosure provides a specific implementation for determining the receiving time offset, to determine the receiving time based on the receiving time offset and perform the interference measurement, thereby improving the interference measurement accuracy and reducing the complexity of the interference measurement.

In the interference measurement method according to the embodiments of the disclosure, the serving cell where the terminal is located and the neighboring cell belong to heterogeneous networks, the second receiving time offset is

$$\left( N_{TA,\ offset} + \frac{N_{TA}}{2} \right) T_c + \Delta_{max}$$

, where the first parameter is - , or the serving cell where the terminal is located and the neighboring cell belong to homogeneous networks, the second receiving time offset is $(N_{TA, off set} + N_{TA})T_c + \Delta_{max}$, where the first parameter is 1, $T_c$ denotes the basic time value, and $\Delta_{max}$ denotes the synchronization error.

In some embodiments, the network device may consider the synchronization error between network devices in different cells. The synchronization error between network devices in different cells may be the synchronization error between the network device of the serving cell and the network device of the neighboring cell. In the case where the serving cell and the neighboring cell belong to HetNet, the network device may determine the second receiving time offset as

$$\left( N_{TA,\ offset} + \frac{N_{TA}}{2} \right) T_c + \Delta_{max}$$

, where the first parameter is $\frac{1}{2}$ , $T_c$ denotes the basic time value, and $\Delta_{max}$ denotes the synchronization error.

For example, in the case where the serving cell and the neighboring cell belong to HetNet, the second receiving time offset from the receiving time of receiving the reference signal by the terminal to the DL slot boundary may be

$$\left( N_{TA,\ offset} + \frac{N_{TA}}{2} \right) T_c + \Delta_{max}$$

, where the first parameter is $\frac{1}{2}$ and $T_c$ denotes the basic time value. It may be understood that $T_c$ may be preset or specified by a protocol, representing a unit time. For example, $T_c$ is 1ms, 5μs, etc.

It may be understood that for the specific determination process of $\left( N_{TA,\ off set} + \frac{N_{TA}}{2} \right) T_c$ , reference may be made to the description of the aforementioned embodiments, and which is not described in the disclosure.

In some embodiments, the network device may consider the synchronization error between network devices in different cells. The synchronization error between network devices in different cells may be the synchronization error between the network device of the serving cell and the network device of the neighboring cell. In the case where the serving cell and the neighboring cell belong to homogeneous networks, for example, in the SBFD scenario, the network device may determine the second receiving time offset $(N_{TA, \text{ offset}} + N_{TA})T_c + \Delta_{\max}$, where the first parameter is 1, $T_c$ denotes the time base value, and $\Delta_{\max}$ denotes the synchronization error.

It may be understood that for the specific determination process of $(N_{TA, \text{ offset}} + N_{TA})T_c$, reference may be made to the description of the aforementioned embodiments, which is not described in the disclosure.

The disclosure provides a method for determining the receiving time offset under different network structures, to determine the receiving time based on the receiving time offset and perform the interference measurement, thereby improving the interference measurement accuracy and reducing the complexity of the interference measurement.

In the interference measurement method according to the embodiments of the disclosure, the timing advance offset value $N_{TA, \text{ off set}}$ is configured for a terminal of the neighboring cell, or the timing advance offset value $N_{TA, \text{ off set}}$ is configured for the terminal.

In some embodiments, the timing advance offset value $N_{TA, \text{ off set}}$ may be configured for the terminal of the neighboring cell.

For example, the network device may determine the timing advance offset value $N_{TA, \text{ off set}}$ configured for a terminal of the neighboring cell terminal based on a predefined rule or a protocol provision.

Certainly, the timing advance offset value $N_{TA, \text{ off set}}$ may also be determined based on a predefined rule or a protocol provision.

As another example, the network device may send indication information, and the indication information may indicate the timing advance offset value $N_{TA, \text{ of f set}}$ configured for the terminal of the neighboring cell. The indication information may be the same as or different from the indication information for indicating the synchronization error $\Delta_{\max}$.

Certainly, the timing advance value $N_{TA}$ may also be determined based on the indication information sent by the network device. The indication information may be the same as one or more of the indication information for indicating the timing advance offset value $N_{TA, \text{ offset}}$ or the indication information for indicating the synchronization error; or the indication information may be different from the indication information for indicating the timing advance offset value $N_{TA, \text{ offset}}$ and the indication information for indicating the synchronization error $\Delta_{\max}$.

It may be understood that no matter whether the first receiving time offset or the second receiving time offset is determined, it may be ensured that the determined receiving time is more accurate by determining the timing advance offset value $N_{TA, \text{ of f set}}$ of the neighboring cell.

In some embodiments, the network device may determine that the timing advance offset value $N_{TA, \text{ offset}}$ may be configured for the terminal of the serving cell.

For example, assuming that in the DTDD scenario, DTDD mainly studies the interference measurement at the co-channel level, such as the CLI at the co-channel level, the corresponding cell where the aggressor terminal is located and the cell where the victim terminal is located are in the same carrier range. The cell-level $N_{TA, \text{ of f set}}$ is used for the preparation time for uplink and downlink switching of network device in the cell. It is mainly related to the TDD or frequency division duplex (FDD) standard and the frequency band where the cell is located. In the DTDD scenario, since the serving cell and the neighboring cell are in the same carrier range, the bands are the same. Based on the above situation, it may be considered that the cell-level $N_{TA, \text{ of f set}}$ at the aggressor terminal is the same as the cell-level $N_{TA, \text{ of f set}}$ at the victim terminal.

Therefore, considering that in some cases where the terminal may not be able to obtain or know the cell-level $N_{TA, \text{ of f set}}$ at the aggressor terminal, the cell-level $N_{TA, \text{ of f set}}$ at the victim terminal may be used to replace the cell-level $N_{TA, \text{ of f set}}$ at the aggressor terminal.

The disclosure replaces the cell-level TA for the neighboring cell with the cell-level TA for the serving cell to determine the receiving time offset, such that the receiving time is determined based on the receiving time offset and the interference measurement is performed, thereby improving the interference measurement accuracy and reducing the complexity of the interference measurement.

In a more specific implementation, the solution of the disclosure is described from the terminal side and the network device side respectively.

On the terminal side (taking the reference signal as the CLI reference signal and the interference measurement as the CLI measurement as an example):

The terminal determines the time of receiving a single CLI reference signal based on the following method and performs the corresponding CLI measurement.

Method 1: Without considering the synchronization error between network devices (or with considering that the synchronization error between base stations is equal to 0), the terminal determines the receiving time of the CLI reference signal based on the following predefined method.

In the HetNet scenario, the TA offset of the time of receiving the SRS by the terminal relative to the DL slot is equal to $\left(N_{TA,\,offset} + \dfrac{N_{TA}}{2}\right)T_c$ , where the first parameter is $\dfrac{1}{2}$ .

In the SBFD scenario, the corresponding TA offset is equal to $(N_{TA,offset} + N_{TA})T_c$, where the first parameter is 1.

$N_{TA}$ and $N_{TA,\,offset}$ are TAs corresponding to the victim terminal, which may be determined based on signaling configuration or a predefined method.

Method 2: With considering the synchronization error $\Delta_{max}$. between network devices, the terminal determines the receiving time of the CLI reference signal based on the following method.

In the HetNet scenario, the corresponding TA offset is equal to $\left(N_{TA,\,offset} + \dfrac{N_{TA}}{2}\right)T_c + \Delta_{max}$ , where the

first parameter is $\dfrac{1}{2}$ .

In the SBFD scenario, the corresponding TA offset is equal to $(N_{TA,offset} + N_{TA})T_c + \Delta_{max}$, where the first parameter is 1.

The terminal determines $\Delta_{max}$. based on the signaling sent by the network device, and the network device determines $\Delta_{max}$. based on the gNB-to-gNB CLI reference signal measurement.

The victim network device measures the corresponding synchronization error based on the receiving time of the CLI reference signal. A configuration of the CLI reference signal carries the identifier information of an aggressor network device.

On the network device side (taking the reference signal as the CLI reference signal and the interference measurement as the CLI measurement as an example):

The network device determines the time of receiving a single CLI RS by the terminal based on the following method.

Method 1: Without considering the synchronization error between network devices (or with considering the synchronization error between base stations is equal to 0), the terminal determines the receiving time of the CLI reference signal based on the following predefined method.

In the HetNet scenario, the TA offset of the time of receiving the SRS by the terminal relative to the DL slot is equal to $\left(N_{TA,\,offset} + \dfrac{N_{TA}}{2}\right)T_c$ , where the first parameter is $\dfrac{1}{2}$ .

In the SBFD scenario, the corresponding TA offset is equal to $(N_{TA,\,offset} + N_{TA})T_c$, where the first parameter is 1.

$N_{TA}$ and $N_{TA,\,offset}$ are TAs corresponding to the victim terminal, which may be determined based on signaling configuration or a predefined method.

Method 2: With considering the synchronization error $\Delta_{max}$. between network devices, the terminal determines the receiving time of the CLI reference signal based on the following method.

In the HetNet scenario, the corresponding TA offset is equal to $\left(N_{TA,\,offset} + \dfrac{N_{TA}}{2}\right)T_c + \Delta_{max}$ , where the

first parameter is $\dfrac{1}{2}$ .

In the SBFD scenario, the corresponding TA offset is equal to $(N_{TA,offset} + N_{TA})T_c + \Delta_{max}$, where the first parameter is 1.

The terminal determines $\Delta_{max}$ based on the signaling sent by the network device, and the network device determines $\Delta_{max}$ based on the gNB-to-gNB CLI reference signal measurement.

The victim network device measures the corresponding synchronization error based on the receiving time of the CLI reference signal. A configuration of the CLI reference signal carries the identifier information of an aggressor network device.

In a more specific implementation, the solution of the disclosure is described on the terminal side.

Assuming that the terminal is a Rel-18 or later Release terminal and the terminal supports the DTDD feature, the terminal performs the corresponding CLI measurement and reporting at a corresponding time-frequency domain position based on the configuration from the network device.

Without considering the synchronization error between network devices, the time offset between the time of receiving the CLI reference signal by the terminal and the DL symbol boundary is equal to: $T_{offset} = N_{TA,\,offset}\,T + T_1 + T_2 - T_3$, where $N_{TA,\,offset}$ is the TA information configured for the aggressor terminal, T is the propagation delay between the victim terminal and the base station, $T_2$ is the propagation delay between the aggressor terminal and the base station, and $T_3$ is the propagation delay between the aggressor terminal and the victim terminal.

As illustrated in FIG. 12, there is illustrated the time offset of the time of the CLI reference signal ahead of the DL symbol boundary.

Based on the existing mechanism, the victim terminal cannot obtain the TA information for the aggressor terminal, so the victim terminal cannot know the accurate receiving time of the CLI RS. To solve the above problem, the specific solutions include the following.

Method 1: The terminal receives the indication signaling from the network device and determines the TA information for the aggressor terminal that transmits the CLI reference signal. To reuse the existing protocol framework as much as possible, the corresponding TA information is configured based on the per-CLI reference signal resource. The TA information is determined through information exchange between base stations.

Method 2: The terminal determines the corresponding receiving time based on its own configured TA information, such as $N_{TA,\,offset}$ and $N_{TA}$.

The HetNet scenario

The HetNet scenario is a relatively important scenario in Rel-18DTDD. HetNet considers the scenario where urban macro cells and micro cells coexist. Considering different communication requirements, the urban macro cell corresponds to the TDD UL/DL configuration dominated by DL, and the micro cell corresponds to the TDD UL/DL configuration dominated by UL. The time offset is $T_{offset} = N_{TA,offset} T_c + T_1 + T_2 - T_3$, considering that the distance between the victim terminal and the aggressor terminal that interfere with each other is relatively close, the corresponding propagation delay $T_3$ may be ignored. Also, considering that the aggressor terminal is located in the urban macro cell and the distance between it and the network device is relatively close, the corresponding propagation delay between the aggressor terminal and the network device of the neighboring cell may also be ignored (e.g., 52m is about 0.17us). From another perspective, DTDD mainly studies the CLI at the co-channel level, that is, the cell where the aggressor terminal is located and the cell where the victim terminal is located are in the same carrier range, and $N_{TA,\,offset}$ is used for the preparation time for the base station to perform U/D switching, which is mainly related to the TDD/FDD standard and the bands. Based on the above analysis, the $N_{TA,offset}$ for the aggressor terminal and the $N_{TA,offset}$ for the victim terminal are the same, that is, $N_{TA,\,offset,\,aggressor} = N_{TA,\,offset,\,victim}$.

In conclusion, in the HetNet scenario, the time offset of the receiving time of receiving the CLI reference signal by the victim terminal is:

$$T_{offset} = N_{TA,\,offset} T_c + T_1 + T_2 - T_3 \approx N_{TA,\,offset} T_c + T_1 = \left( N_{TA,\,offset} + \frac{N_{TA}}{2} \right) T_c \text{ , where the first}$$

parameter is $\frac{1}{2}$.

The SBFD scenario

In the SBFD scenario, an advanced terminal that supports the SBFD feature supports configuring a UL subband in a DL slot and transmitting uplink data with the UL subband. For a legacy terminal that does not support the SBFD feature, the legacy terminal transmits downlink data normally in a DL slot, and the uplink data sent by the corresponding advanced terminal will interfere with the downlink reception of the legacy terminal. The advanced terminal and legacy terminal may be in the same cell or different cells.

The time offset is $T_{offset} = N_{TA,offset} T_c + T + T_2 - T_3$, considering that the distance between the victim terminal and the aggressor terminal is relatively close, the corresponding propagation delay $T_3$ may be ignored. Also, considering that the aggressor terminal is located at the edge of the urban macro cell, the corresponding propagation delay between the aggressor terminal and the network device of the neighboring cell is approximately the same as the propagation delay between the victim terminal and the network device of the serving cell, that is, $T_2 \approx T_1$. From another perspective, DTDD mainly studies the CLI at the co-channel level, that is, the cell where the aggressor terminal is located and the cell where the victim terminal is located are in the same carrier range, and $N_{TA,offset}$ is used for the preparation time for the base station to perform U/D switching, which is mainly related to the TDD/FDD standard and the bands. Based on the above analysis, the $N_{TA,offset}$ for the aggressor terminal and the $N_{TA,offset}$ for the victim terminal are the same, that is, $N_{TA,\,offset,\,aggressor} = N_{TA,\,offset,\,victim}$.

In conclusion, in the SBFD scenario, the time offset of the receiving time of receiving the CLI reference signal by the victim terminal is: $T_{offset} = N_{TA,offset} T_c + T_1 + T_2 - T_3 \approx N_{TA,offset} T_c + 2T_1 = (N_{TA,offset} + N_{TA}) T_c$, where the first parameter is 1.

The embodiments mainly considers the two scenarios of HetNet and SBFD, and determine the receiving time of the CLI reference signal based on the victim terminal's own TA information and a predefined rule, thereby improving the CLI measurement accuracy and reducing the CLI measurement complexity while minimizing the impact of the standard.

In a more specific implementation, the solution of the disclosure is described on the network device side.

Assuming that the network device is a Rel-18 or later release network device, and the terminal is a terminal supporting the DTDD feature, the terminal performs the corresponding CLI measurement and reporting at a corresponding time-frequency domain position based on the configuration from the network device.

With considering the synchronization error $\Delta_{max}$ between network devices, the time offset of the time when the terminal the CLI reference signal ahead of the DL symbol boundary is equal to $T_{offset} + \Delta_{max}$, where $T_{offset}$ may be determined based on the above implementations.

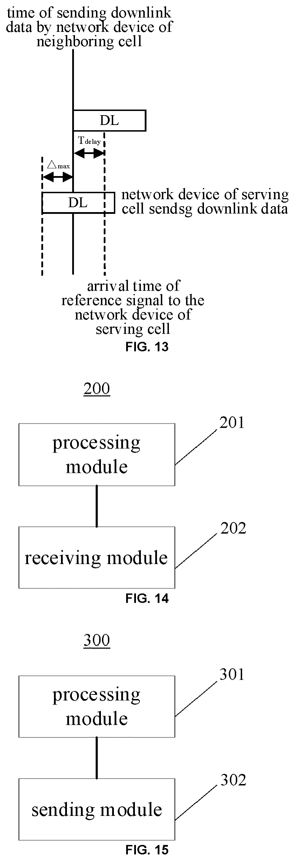

In the Rel-18DTDD scenario, in addition to supporting UE-to-UE CLI measurement, gNB-to-gNB CLI measurement is also supported. That is, the aggressor network device sends the corresponding CLI reference signal, and the victim network device receives the corresponding CLI reference signal and performs the CLI measurement. As illustrated in FIG. 13, with considering the synchronization error $\Delta_{max}$. between base stations, the time difference between the arrival of the CLI reference signal at the victim network device and the corresponding DL symbol boundary of the victim network device is equal to: $T_{delay} + \Delta_{max}$, where $T_{delay}$ is equal to the propagation delay of the CLI reference signal, which is related to the distance between the victim network device and the aggressor network device. For example, if the distance between the network devices is equal to 500m, the corresponding propagation delay of the CLI reference signal is $T_{delay} = 1.67\mu s$.

Based on the above, the victim network device measures the corresponding synchronization error based on the receiving time of the CLI reference signal. The configuration of the CLI reference signal carries identifier information of the aggressor network device. To improve the corresponding measurement accuracy, the victim network device does not expect to measure the CLI reference signal from a different aggressor network device in the same time-frequency domain.

The network device sends signaling to indicate the synchronization errors $\Delta_{max}$. between the victim terminal and different aggressor terminals. Considering that the victim terminal performs the corresponding measurement based on the CLI reference signal configuration of the cell of the aggressor terminal, and cannot know the aggressor terminal that sends the CLI reference signal and the serving cell where it is located, the network device configures the corresponding synchronization error $\Delta_{max}$. based on the per CLI reference signal, and sends a signaling indication to the terminal, so that the terminal determines to receive the CLI reference signal for UE-to-UE measurement, and the corresponding time offset is equal to $T_{offset} + \Delta_{max}$.

The embodiments mainly consider the synchronization error $\Delta_{max}$. between network devices, and designs a mechanism to measure the corresponding synchronization error $\Delta_{max}$ determine the time when the victim terminal receives the CLI reference signal.

It should be noted that those skilled in the art may understand that the various implementations/embodiments involved in the embodiments of the disclosure may be used in conjunction with the aforementioned embodiments or may be used independently. Whether used alone or in conjunction with the aforementioned embodiments, the implementation principle is similar. In the implementation of the disclosure, some embodiments are described by using implementation methods used together. Certainly, those skilled in the art may understand that such examples are not limitations of the embodiments of the disclosure.

Based on the same concept, the embodiments of the disclosure also provide comm unication devices and devices.

It is understandable that the communication devices and devices according to the embodiments of the disclosure include hardware structures and/or software modules corresponding to the execution of each function in order to realize the above functions. In combination with the units and algorithm steps of each example disclosed in the embodiments of the disclosure, the embodiments of the disclosure may be implemented in the form of hardware or a combination of hardware and computer software. Whether a function is executed in the form of hardware or computer software driving hardware depends on the specific application and design constraints of the technical solution. Those skilled in the art may use different methods to implement the described functions for each specific application, but such implementation should not be considered to exceed the scope of the technical solution of the embodiments of the disclosure.

FIG. 14 is a schematic diagram illustrating a communication device according to an example embodiment. As illustrated in FIG. 14, the communication device 200 includes: a processing module 201 configured to determine a receiving time of a reference signal, in which there is an offset between the receiving time and a downlink (DL) slot boundary, and the DL slot boundary is a starting time position for receiving downlink data; and a receiving module 202 configured to receive the reference signal based on the receiving time; in which the processing module 201 is further configured to perform an interference measurement.

The disclosure performs the interference measurement by determining the receiving time of the reference signal that is offset from the downlink slot boundary, thereby improving the interference measurement accuracy and reducing the complexity of the interference measurement.

In some embodiments, the processing module 201 is further configured to: determine a timing advance offset value $N_{TA,offset}$ and a timing advance value $N_{TA}$, in which the timing advance offset value $N_{TA,offset}$ and the timing advance value $N_{TA}$ are used for describing a timing advance (TA) corresponding to the terminal in a serving cell; determine a receiving time offset based on the timing advance offset value $N_{TA,\,offset}$ and the timing advance value $N_{TA}$; and determine the receiving time based on the receiving time offset and the DL slot boundary.

The disclosure determines the offset between the receiving time and the downlink slot boundary through the timing advance offset value and the timing advance value, to determine the receiving time based on the offset and perform the interference measurement, thereby improving the interference measurement accuracy and reducing the complexity of the interference measurement.

In some implementations, the receiving time offset includes a first receiving time offset; the processing module 201 is further configured to determine the first receiving time offset based on a sum of the timing advance offset value $N_{TA,\,offset}$ and the timing advance value $N_{TA}$ multiplied by a first parameter.

The disclosure provides a specific implementation for determining the receiving time offset, to determine the receiving time based on the receiving time offset and perform the interference measurement, thereby improving the interference measurement accuracy and reducing the complexity of the interference measurement.

In some embodiments, the serving cell and a neighboring cell belong to heterogeneous networks, the first receiving time offset is $\left( N_{TA,\,offset} + \dfrac{N_{TA}}{2} \right) T_c$, and the first parameter is $\dfrac{1}{2}$; or the serving cell and a neighboring cell belong to homogeneous networks, the first receiving time offset is $(N_{TA,\,offset} + N_{TA})T_c$, and the first parameter is 1; where $T_c$ denotes a basic time value.

The disclosure provides a method for determining the receiving time offset under different network structures, to determine the receiving time based on the receiving time offset and perform the interference measurement, thereby improving the interference measurement accuracy and reducing the complexity of the interference measurement.

In some embodiments, the receiving time offset includes a second receiving time offset and the receiving module 202 is further configured to receive indication information, in which the indication information is used for indicating a synchronization error between a first network device of the serving cell and a second network device of a neighboring cell; and the processing module 201 is further configured to determine the second receiving time offset based on the timing advance offset value $N_{TA,\,offset}$, the timing advance value $N_{TA}$ and the synchronization error.

The disclosure determines the offset between the receiving time and the downlink slot boundary through the timing advance offset value, the timing advance value and the synchronization error, to determine the receiving time based on the offset and perform the interference measurement, thereby improving the interference measurement accuracy and reducing the complexity of the interference measurement.

In some embodiments, the receiving time offset further includes a first receiving time offset and the processing module 201 is further configured to: determine the first receiving time offset based on a sum of the timing advance offset value $N_{TA,\,offset}$ and the timing advance value $N_{TA}$ multiplied by a first parameter and determine the second receiving time offset based on a sum of the first receiving time offset and the synchronization error.

The disclosure provides a specific implementation for determining the receiving time offset, to determine the receiving time based on the receiving time offset and perform the interference measurement, thereby improving the interference measurement accuracy and reducing the complexity of the interference measurement.

In some embodiments, the serving cell where the terminal is located and the neighboring cell belong to heterogeneous networks, the second receiving time offset is $\left( N_{TA,\,offset} + \dfrac{N_{TA}}{2} \right) T_c + \Delta_{max}$, and the first parameter is $\dfrac{1}{2}$; or the serving cell where the terminal is located and the neighboring cell belong to homogeneous networks, the second receiving time offset is $(N_{TA,\,offset} + N_{TA})T_c + \Delta_{max}$, and the first parameter is 1, where $T_c$ denotes a basic time value, and $\Delta_{max}$ denotes the synchronization error.

The disclosure provides a method for determining the receiving time offset under different network structures, to determine the receiving time based on the receiving time offset and perform the interference measurement, thereby improving the interference measurement accuracy and reducing the complexity of the interference measurement.

In some implementations, the timing advance offset value $N_{TA,\,offset}$ is configured for a terminal of a neighboring cell, or the timing advance offset value $N_{TA,\,offset}$ is configured for the terminal.

The disclosure determines the receiving time offset through the cell-level TA for the serving cell or the neighboring cell, so that the receiving time is determined based on the receiving time offset and the interference measurement is performed, thereby improving the interference measurement accuracy and reducing the complexity of the interference measurement.

FIG. 15 is a schematic diagram illustrating another communication device according to an example embodiment.

As illustrated in FIG. 15, the communication device 300 includes: a processing module 301 configured to determine a receiving time of a reference signal, in which there is an offset between the receiving time and a downlink (DL) slot boundary, and the DL slot boundary is a starting time position for a terminal to receive downlink data; and a sending module 302 configured to determine not to send the downlink data in a slot corresponding to the receiving time, in which the slot corresponding to the receiving time is used by the terminal to receive the reference signal and to perform an interference measurement.

The disclosure performs the interference measurement by determining the receiving time of the reference signal that is offset from the downlink slot boundary, thereby improving the interference measurement accuracy and reducing the complexity of the interference measurement.

In some embodiments, the processing module 301 is further configured to determine a timing advance offset value $N_{TA, \text{offset}}$ and a timing advance value $N_{TA}$, in which the timing advance offset value $N_{TA, \text{offset}}$ and the timing advance value $N_{TA}$ are used for describing a timing advance (TA) corresponding to the terminal in a serving cell; and determine the receiving time offset based on the timing advance offset value $N_{TA, \text{offset}}$ and the timing advance value $N_{TA}$; and determine the receiving time based on the receiving time offset and the DL slot boundary.

The disclosure determines the offset between the receiving time and the downlink slot boundary through the timing advance offset value and the timing advance value, to determine the receiving time based on the offset and perform the interference measurement, thereby improving the interference measurement accuracy and reducing the complexity of the interference measurement.

In some implementations, the receiving time offset includes a first receiving time offset; and the processing module 301 is further configured to determine the first receiving time offset based on a sum of the timing advance offset value $N_{TA, \text{offset}}$ and the timing advance value $N_{TA}$ multiplied by a first parameter.

The disclosure provides a specific implementation for determining the receiving time offset, to determine the receiving time based on the receiving time offset and perform the interference measurement, thereby improving the interference measurement accuracy and reducing the complexity of the interference measurement.

In some embodiments, the serving cell and a neighboring cell belong to heterogeneous networks, the first receiving time offset is $\left( N_{TA, \text{offset}} + \dfrac{N_{TA}}{2} \right) T_c$, and the first parameter is $\dfrac{1}{2}$; or the serving cell and a neighboring cell belong to homogeneous networks, the first receiving time offset is $(N_{TA, \text{offset}} + N_{TA})T_c$, and the first parameter is 1; where $T_c$ denotes a basic time value.

The disclosure provides a method for determining the receiving time offset under different network structures, to determine the receiving time based on the receiving time offset and perform the interference measurement, thereby improving the interference measurement accuracy and reducing the complexity of the interference measurement.

In some embodiments, the receiving time offset includes a second receiving time offset, the sending module 302 is further configured to send indication information, in which the indication information is used for indicating a synchronization error between a first network device of the serving cell and a second network device of a neighboring cell; and the processing module 301 is further configured to determine the second receiving time offset based on the timing advance offset value $N_{TA, \text{offset}}$, the timing advance value $N_{TA}$ and the synchronization error.

The disclosure determines the offset between the receiving time and the downlink slot boundary through the timing advance offset value, the timing advance value and the synchronization error, to determine the receiving time based on the offset and perform the interference measurement, thereby improving the interference measurement accuracy and reducing the complexity of the interference measurement.

In some embodiments, the receiving time offset further includes a first receiving time offset and the processing module 301 is further configured to: determine the first receiving time offset based on a sum of the timing advance offset value $N_{TA, \text{offset}}$ and the timing advance value $N_{TA}$ multiplied by a first parameter; and determine the second receiving time offset based on a sum of the first receiving time offset and the synchronization error.

The disclosure provides a specific implementation for determining the receiving time offset, to determine the receiving time based on the receiving time offset and perform the interference measurement, thereby improving the interference measurement accuracy and reducing the complexity of the interference measurement.

In some embodiments, the serving cell where the terminal is located and a neighboring cell belong to heterogeneous networks, the second receiving time offset is $\left( N_{TA, \text{offset}} + \dfrac{N_{TA}}{2} \right) T_c + \Delta_{\max}$, and the first parameter is $\dfrac{1}{2}$; or the serving cell where the terminal is located and a neighboring cell belong to homogeneous networks, the second receiving time offset is $(N_{TA, \text{offset}} + N_{TA})T_c + \Delta_{\max}$, and the first parameter is 1; where $T_c$ denotes a basic time value, and

$\Delta_{max}$. denotes the synchronization error.

The disclosure provides a method for determining the receiving time offset under different network structures, to determine the receiving time based on the receiving time offset and perform the interference measurement, thereby improving the interference measurement accuracy and reducing the complexity of the interference measurement.

In some implementations, the timing advance offset value $N_{TA, offset}$ is configured for a terminal of a neighboring cell, or the timing advance offset value $N_{TA, offset}$ is configured for the terminal.

The disclosure determines the receiving time offset through the cell-level TA for the serving cell and the neighboring cell, so that the receiving time is determined based on the receiving time offset and the interference measurement is performed, thereby improving the interference measurement accuracy and reducing the complexity of the interference measurement.

It may be understood that the above communication device 200 may further include a sending module, and the communication device 300 may further include a receiving module. It may be understood that the above communication device 200 and the communication device 300 are not limited to the modules illustrated in the figures and may further include other corresponding modules according to actual conditions, which is not limited in the disclosure.

Regarding the communication devices in the above embodiments, the specific manner in which each module performs operations has been described in detail in the embodiments of the methods, which will not be elaborated here.

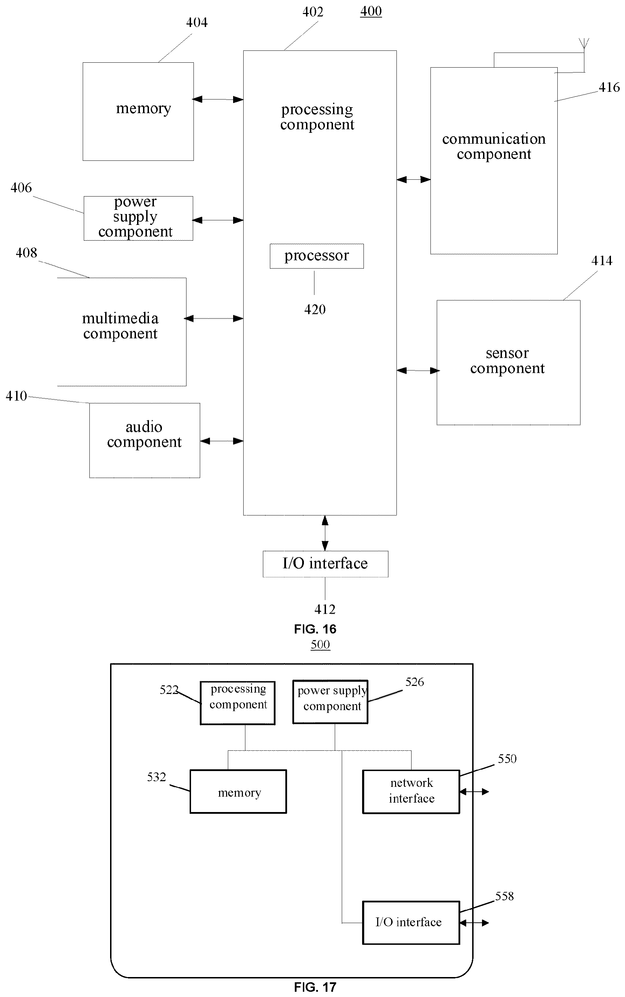

FIG. 16 is a schematic diagram illustrating a communication device according to an example embodiment. For example, the device 400 may be any terminal such as a mobile phone, a computer, a digital broadcast terminal, a message transceiver device, a game console, a tablet device, a medical device, a fitness device, a personal digital assistant, etc.

As illustrated in FIG. 16, the device 400 may include one or more of the following components: a processing component 402, a memory 404, a power supply component 406, a multimedia component 408, an audio component 410, an input/output (I/O) interface 412, a sensor component 414, and a communication component 416.

The processing component 402 generally controls the overall operation of the device 400, such as operations associated with display, phone calls, data communications, camera operations, and recording operations. The processing component 402 may include one or more processors 420 to execute instructions to complete all or part of the steps of the above-mentioned methods. In addition, the processing component 402 may include one or more modules to facilitate the interaction between the processing component 402 and other components. For example, the processing component 402 may include a multimedia module to facilitate the interaction between the multimedia component 408 and the processing component 402.

The memory 404 is configured to store various types of data to support operations on the device 400. Examples of such data include instructions for any application or method operating on the device 400, contact data, phone book data, messages, pictures, videos, etc. The memory 404 may be implemented by any type of volatile or nonvolatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 406 provides power to the various components of the device 400. The power supply component 406 may include a power management system, one or more power supplies, and other components associated with generating, managing, and distributing power for the device 400.

The multimedia component 408 includes a screen that provides an output interface between the device 400 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 408 includes a front-facing camera and/or a rear-facing camera. When the device 400 is in an operating mode, such as a shooting mode or a video mode, the front-facing camera and/or the rear-facing camera may receive external multimedia data. Each of the front-facing camera and the rear-facing camera may be a fixed optical lens system or have a focal length and optical zoom capability.

The audio component 410 is configured to output and/or input audio signals. For example, the audio component 410 includes a microphone (MIC), and when the device 400 is in an operating mode, such as a call mode, a recording mode, and a speech recognition mode, the microphone is configured to receive an external audio signal. The received audio signal may be further stored in the memory 404 or sent via the communication component 416. In some embodiments, the audio component 410 also includes a speaker for outputting audio signals.

The I/O interface 412 provides an interface between the processing component 402 and peripheral interface modules, such as keyboards, click wheels, buttons, etc. These buttons may include, but are not limited to, a home button, a volume button, a start button, and a lock button.

The sensor component 414 includes one or more sensors for providing various aspects of status assessment for the device 400. For example, the sensor component 414 may detect the open/closed state of the device 400, the relative positioning of components, such as the display and keypad of the device 400, and the sensor assembly 414 may also detect the position change of the device 400 or a component of the device 400, the presence or absence of user contact with the device 400, the orientation or acceleration/deceleration of the device 400, and the temperature change of the device 400. The sensor component 414 may include a proximity sensor configured to detect the presence of nearby objects without any physical contact. The sensor component 414 may also include an optical sensor, such as a CMOS or CCD image sensor, for use in imaging applications. In some embodiments, the sensor component 414 may also include an acceleration sensor, a gyroscope sensor, a magnetic sensor, a pressure sensor, or a temperature sensor.

The communication component 416 is configured to facilitate wired or wireless communication between the device 400 and other devices. The device 400 may access a wireless network based on a communication standard, such as Wi-Fi, 2G or 3G, or a combination thereof. In an example embodiment, the communication component 416 receives a broadcast signal or broadcast-related information from an external broadcast management system via a broadcast channel. In an example embodiment, the communication component 416 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an example embodiment, the device 400 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an example embodiment, a non-transitory computer-readable storage medium including instructions is also provided, such as a memory 404 including instructions, which may be executed by a processor 420 of the device 400 to perform the above methods. For example, the non-transitory computer-readable storage medium may be a ROM, a random-access memory (RAM), a CD-ROM, a magnetic tape, a floppy disk, an optical data storage device, etc.

FIG. 17 is a schematic diagram illustrating another communication device according to an example embodiment. For example, the device 500 may be provided as a base station, or a server. As illustrated in FIG. 17, the device 500 includes a processing component 522, which further includes one or more processors, and a memory resource represented by a memory 532 for storing instructions executable by the processing component 522, such as an application. The application stored in the memory 532 may include one or more modules, each of which corresponds to a set of instructions. In addition, the processing component 522 is configured to execute instructions to perform the above methods.

The device 500 may also include a power supply component 526 configured to perform power management of the device 500, a wired or wireless network interface 550 configured to connect the device 500 to a network, and an input/output (I/O) interface 558. The device 500 may operate based on an operating system stored in the memory 532, such as Windows Server™, Mac OS X™, Unix™, Linux™, FreeBSD™, or the like.

In some embodiments, the disclosure further provides a communication system, which includes a terminal and a network device. The terminal may perform the methods described in FIGS. 5 to 8 above. The network device may perform the methods described in FIGS. 9 to 11. Specific reference is made to the description of the above embodiments, and the disclosure will not be repeated here.

The disclosure determines the receiving time of the CLI reference signal, thereby improving the accuracy of the corresponding CLI measurement and reducing the complexity of the CLI measurement.

It may be further understood that in the disclosure, "a plurality of" refers to two or more than two, and other quantifiers are similar thereto. "And/or" describes the association relationship of associated objects, indicating that three relationships may exist. For example, A and/or B may represent: A exists alone, A and B exist at the same time, and B exists alone. The character "/" generally indicates that the associated objects before and after are in an "or" relationship. The singular forms "a", "an", and "the" are also intended to include plural forms, unless the context clearly indicates other meanings.

It may be further understood that the terms "first", "second", etc. are used to describe various information, but such information should not be limited to these terms. These terms are only used to distinguish the same type of information from each other, and do not indicate a specific order or degree of importance. In fact, the expressions "first", "second", etc. may be used interchangeably. For example, without departing from the scope of the disclosure, the first information may be referred to as the second information, and similarly, the second information may be referred to as the first information.

It may be further understood that the meanings of the words "in response to" and "if" involved in the disclosure depend on the context and the actual usage scenario. For example, the word "in response to" used herein may be interpreted as "at the time of..." or "when..." or "in the case that" or "if".

It may be further understood that, although the operations are described in a specific order in the drawings in the embodiments of the disclosure, it should not be understood as requiring the operations to be performed in the specific order shown or in a serial order, or requiring the execution of all the operations shown to obtain the desired results. In certain environments, multitasking and parallel processing may be advantageous.

Those skilled in the art will readily appreciate other embodiments of the disclosure after considering the specification and practicing the disclosure herein. The disclosure is intended to cover any modifications, uses or adaptations of the disclosure, which follow the general principles of the disclosure and include common knowledge or customary technical means in the art that are not disclosed in the disclosure.

It may be understood that the disclosure is not limited to the precise structures that have been described above and shown in the drawings, and that various modifications and changes may be made without departing from the scope thereof. The scope of the disclosure is limited only by the scope of the appended claims.

## Claims

1. An interference measurement method, performed by a terminal, the method comprising:

   determining a receiving time of a reference signal, wherein there is an offset between the receiving time and a downlink (DL) slot boundary, and the DL slot boundary is a starting time position for receiving downlink data;
   receiving the reference signal based on the receiving time; and
   performing an interference measurement.

2. The method of claim 1, wherein determining the receiving time of the reference signal comprises:

   determining a timing advance offset value $N_{TA, offset}$ and a timing advance value $N_{TA}$, wherein the timing advance offset value $N_{TA, offset}$ and the timing advance value $N_{TA}$ are used for describing a timing advance (TA) corresponding to the terminal in a serving cell;
   determining a receiving time offset based on the timing advance offset value $N_{TA, offset}$ and the timing advance value $N_{TA}$; and
   determining the receiving time based on the receiving time offset and the DL slot boundary.

3. The method of claim 2, wherein the receiving time offset comprises a first receiving time offset;
   wherein determining the receiving time offset based on the timing advance offset value $N_{TA, offset}$ and the timing advance value $N_{TA}$ comprises:
   determining the first receiving time offset based on a sum of the timing advance offset value $N_{TA, offset}$ and the timing advance value $N_{TA}$ multiplied by a first parameter.

4. The method of claim 3, wherein the serving cell and a neighboring cell belong to heterogeneous networks, the first receiving time offset is $\left( N_{TA, offset} + \dfrac{N_{TA}}{2} \right) T_c$, and the first parameter is $\dfrac{1}{2}$; or

   wherein the serving cell and a neighboring cell belong to homogeneous networks, the first receiving time offset is $(N_{TA, offset} + N_{TA}) T_c$, and the first parameter is 1;
   where $T_c$ denotes a basic time value.

5. The method of claim 2, wherein the receiving time offset comprises a second receiving time offset and the method further comprises:

   receiving indication information, wherein the indication information is used for indicating a synchronization error between a first network device of the serving cell and a second network device of a neighboring cell;
   wherein determining the receiving time offset based on the timing advance offset value $N_{TA, offset}$ and the timing advance value $N_{TA}$ comprises:
   determining the second receiving time offset based on the timing advance offset value $N_{TA, offset}$, the timing advance value $N_{TA}$ and the synchronization error.

6. The method of claim 5, wherein the receiving time offset further comprises a first receiving time offset and determining the second receiving time offset based on the timing advance offset value $N_{TA, offset}$, the timing advance value $N_{TA}$ and the synchronization error comprises:

   determining the first receiving time offset based on a sum of the timing advance offset value $N_{TA, offset}$ and the timing advance value $N_{TA}$ multiplied by a first parameter; and

determining the second receiving time offset based on a sum of the first receiving time offset and the synchronization error.

7. The method of claim 6, wherein the serving cell where the terminal is located and the neighboring cell belong to heterogeneous networks, the second receiving time offset is $\left( N_{TA,\ \text{offset}} + \dfrac{N_{TA}}{2} \right) T_c + \Delta_{\max}$ , and the first parameter is - ; or 2

   wherein the serving cell where the terminal is located and the neighboring cell belong to homogeneous networks, the second receiving time offset is $(N_{TA,\ \text{offset}} + N_{TA})T_c + \Delta_{\max}$, and the first parameter is 1;
   where $T_c$ denotes a basic time value, and $\Delta_{\max}$ denotes the synchronization error.

8. The method of any one of claims 2 to 7, wherein the timing advance offset value $N_{TA,\text{offset}}$ is configured for a terminal of a neighboring cell, or the timing advance offset value $N_{TA,\ \text{offset}}$ is configured for the terminal.

9. An interference measurement method, performed by a network device, the method comprising:

   determining a receiving time of a reference signal, wherein there is an offset between the receiving time and a downlink (DL) slot boundary, and the DL slot boundary is a starting time position for a terminal to receive downlink data; and
   determining not to send the downlink data in a slot corresponding to the receiving time, wherein the slot corresponding to the receiving time is used by the terminal to receive the reference signal and to perform an interference measurement.

10. The method of claim 9, wherein determining the receiving time of the reference signal comprises:

    determining a timing advance offset value $N_{TA,\text{offset}}$ and a timing advance value $N_{TA,}$ wherein the timing advance offset value $N_{TA,\ \text{offset}}$ and the timing advance value $N_{TA}$ are used for describing a timing advance (TA) corresponding to the terminal in a serving cell;
    determining the receiving time offset based on the timing advance offset value $N_{TA,\text{offset}}$ and the timing advance value $N_{TA}$; and
    determining the receiving time based on the receiving time offset and the DL slot boundary.

11. The method of claim 10, wherein the receiving time offset comprises a first receiving time offset;
    wherein determining the receiving time offset based on the timing advance offset value $N_{TA,\ \text{offset}}$ and the timing advance value $N_{TA}$ comprises:
    determining the first receiving time offset based on a sum of the timing advance offset value $N_{TA,\text{offset}}$ and the timing advance value $N_{TA}$ multiplied by a first parameter.

12. The method of claim 11, wherein the serving cell and a neighboring cell belong to heterogeneous networks, the first receiving time offset is $\left( N_{TA,\ \text{offset}} + \dfrac{N_{TA}}{2} \right) T_c$ , and the first parameter is $\dfrac{1}{2}$ ; or

    wherein the serving cell and a neighboring cell belong to homogeneous networks, the first receiving time offset is $(N_{TA,}\ \text{offset} + N_{TA})T_c$, and the first parameter is 1;
    where $T_c$ denotes a basic time value.

13. The method of claim 10, wherein the receiving time offset comprises a second receiving time offset and the method further comprises:

    sending indication information, wherein the indication information is used for indicating a synchronization error between a first network device of the serving cell and a second network device of a neighboring cell;
    wherein determining the receiving time offset based on the timing advance offset value $N_{TA,\text{offset}}$ and the timing advance value $N_{TA}$ comprises:
    determining the second receiving time offset based on the timing advance offset value $N_{TA,\ \text{offset}}$ , the timing

advance value $N_{TA}$ and the synchronization error.

14. The method of claim 13, wherein the receiving time offset further comprises a first receiving time offset and determining the second receiving time offset based on the timing advance offset value $N_{TA, offset}$, the timing advance value $N_{TA}$ and the synchronization error comprises:

> determining the first receiving time offset based on a sum of the timing advance offset value $N_{TA, offset}$ and the timing advance value $N_{TA}$ multiplied by a first parameter; and
> determining the second receiving time offset based on a sum of the first receiving time offset and the synchronization error.

15. The method of claim 14, wherein the serving cell where the terminal is located and a neighboring cell belong to heterogeneous networks, the second receiving time offset is $\left( N_{TA, offset} + \dfrac{N_{TA}}{2} \right) T_c + \Delta_{max}$ , and the first parameter is $\dfrac{1}{2}$ ; or

> wherein the serving cell where the terminal is located and a neighboring cell belong to homogeneous networks, the second receiving time offset is $(N_{TA, offset} + N_{TA})T_c + \Delta_{max}$, and the first parameter is 1;
> where $T_c$ denotes a basic time value, and $\Delta_{max}$ denotes the synchronization error.

16. The method of any one of claims 10 to 15, wherein the timing advance offset value $N_{TA, offset}$ is configured for a terminal of a neighboring cell, or the timing advance offset value $N_{TA, offset}$ is configured for the terminal.

17. A communication device, comprising:

> a processing module, configured to determine a receiving time of a reference signal, wherein there is an offset between the receiving time and a downlink (DL) slot boundary, and the DL slot boundary is a starting time position for receiving downlink data; and
> a receiving module, configured to receive the reference signal based on the receiving time;
> wherein the processing module is further configured to perform an interference measurement.

18. A communication device, comprising:

> a processing module, configured to determine a receiving time of a reference signal, wherein there is an offset between the receiving time and a downlink (DL) slot boundary, and the DL slot boundary is a starting time position for a terminal to receive downlink data; and
> a sending module, configured to determine not to send the downlink data in a slot corresponding to the receiving time, wherein the slot corresponding to the receiving time is used for the terminal to receive the reference signal and to perform an interference measurement.

19. A communication device, comprising:

> a processor, and
> a memory for storing processor-executable instructions;
> wherein the processor is configured to perform the method of any one of claims 1 to 8.

20. A communication device, comprising:

> a processor, and
> a memory for storing processor-executable instructions;
> wherein the processor is configured to perform the method of any one of claims 9-16.

21. A communication system, comprising: a terminal and a network device;

wherein the terminal is configured to perform the method of any one of claims 1 to 8; and
the network device is configured to perform the method of any one of claims 9 to 16.

22. A computer-readable storage medium, wherein when instructions in the computer-readable storage medium are executed by a processor of a terminal, the terminal is enabled to perform the method of any one of claims 1 to 8.

23. A computer-readable storage medium, wherein when instructions in the computer-readable storage medium are executed by a processor of a network device, the network device is enabled to perform the method of any one of claims 9 to 16.

100

110

120

FIG. 1

neighboring
cell

network
device 1

network
device 2

serving
cell

terminal
1

terminal
2

FIG. 2

FIG. 3

network device of serving cell sends downlink data

terminal in serving cell receives downlink data

terminal in serving cell sends uplink data

terminal in serving cell receives reference signal sent by terminal in neighboring cell

network device of neighboring cell sends downlink data

terminal in neighboring cell receives downlink data

terminal in neighboring cell sends uplink data

DL

t1    DL

2t1

UL

DL

t1=t2

DL

t2    DL

2t2

UL

FIG. 4

S11

determine a receiving time of a reference signal

S12

receive the reference signal based on the receiving time

S13

perform an interference measurement

FIG. 5

S21

determine $N_{TA, Offset}$ and $N_{TA}$

S22

determine a receiving time offset based on $N_{TA, Offset}$ and $N_{TA}$

S23

determine the receiving time based on the receiving time offset and DL slot boundary

FIG. 6

S31

receive indication information

S32

determine receiving time offset based on $N_{TA,Offset}$ and $N_{TA}$

FIG. 7

S41

determine a first receiving time offset based on a sum of $N_{TA,Offset}$ and $N_{TA}$

S42

determine a second receiving time offset based on the first receiving time offset and a synchronization error

FIG. 8

S51

determine a receiving time of a reference signal

S52

determine based on the receiving time that downlink data is not sent in a corresponding slot

FIG. 9

S61

determine $N_{TA, Offset}$ and $N_{TA}$

S62

determine a receiving time offset based on $N_{TA, Offset}$ and $N_{TA}$

S63

determine the receiving time based on the receiving time offset and DL slot boundary

**FIG. 10**

S61

determine a first receiving time offset based on a sum of $N_{TA,Offset}$ and $N_{TA}$

S62

determine a second receiving time offset based on the first receiving time offset and a synchronization error

**FIG. 11**

time of sending downlink data by network device

terminal in neighboring cell sends uplink data — UL

terminal in serving cell receives downlink data — DL

time offset

reference signal sending time

**FIG. 12**

time of sending downlink
data by network device of
neighboring cell

DL

$T_{delay}$

$\triangle_{max}$

DL

network device of serving
cell sendsg downlink data

arrival time of
reference signal to the
network device of
serving cell

FIG. 13

200

processing
module          /201

receiving module   /202

FIG. 14

300

processing
module          /301

sending module   /302

FIG. 15

402    400

404

memory

processing
component

communication
component

416

406

power
supply
component

processor

408

420

414

multimedia
component

sensor
component

410

audio
component

I/O interface

412

**FIG. 16**

500

522

processing
component

power supply
component

526

550

532

memory

network
interface

558

I/O interface

**FIG. 17**

36

## INTERNATIONAL SEARCH REPORT

| International application No. |
| --- |
| **PCT/CN2023/076997** |

### A. CLASSIFICATION OF SUBJECT MATTER

H04W24/08(2009.01)i

According to International Patent Classification (IPC) or to both national classification and IPC

### B. FIELDS SEARCHED

Minimum documentation searched (classification system followed by classification symbols)

IPC: H04W, H04Q, H04L

Documentation searched other than minimum documentation to the extent that such documents are included in the fields searched

Electronic data base consulted during the international search (name of data base and, where practicable, search terms used)

CNTXT, ENTXTC, WPABSC, DWPI, WPABS, ENTXT, USTXT, WOTXT, CNKI, IEEE, 3GPP: 交叉链路干扰, 测量, 参考信号, 接收, 时间, 定时, 时刻, 下行, 边界, 初始, 偏移, cross link interference, CLI, measure, reference signal, RS, receive, time, DL, boundary, initial, offset

### C. DOCUMENTS CONSIDERED TO BE RELEVANT

| Category* | Citation of document, with indication, where appropriate, of the relevant passages | Relevant to claim No. |
| --- | --- | --- |
| X | WO 2019028867 A1 (FUJITSU LTD.) 14 February 2019 (2019-02-14) description, page 7 line 20-page 12 line 24, and figures 1-5 | 1-23 |
| A | CN 111988099 A (HISENSE GROUP CO., LTD.) 24 November 2020 (2020-11-24) entire document | 1-23 |
| A | WO 2022031141 A1 (LG ELECTRONICS INC.) 10 February 2022 (2022-02-10) entire document | 1-23 |
| A | WO 2020165396 A1 (TELEFONAKTIEBOLAGET LM ERICSSON (PUBL)) 20 August 2020 (2020-08-20) entire document | 1-23 |
| A | US 2021006438 A1 (NOKIA TECHNOLOGIES OY) 07 January 2021 (2021-01-07) entire document | 1-23 |
| A | NOKIA et al. "UE CLI measurement configuration, reporting, and NW signaling" *3GPP TSG-RAN2#107bis, R2-1912408*, 18 October 2019 (2019-10-18), entire document | 1-23 |

☐ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 October 2023** | **24 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

**INTERNATIONAL SEARCH REPORT**
Information on patent family members

International application No.

**PCT/CN2023/076997**

| Patent document cited in search report | | | Publication date (day/month/year) | Patent family member(s) | | | Publication date (day/month/year) |
|---|---|---|---|---|---|---|---|
| WO | 2019028867 | A1 | 14 February 2019 | None | | | |
| CN | 111988099 | A | 24 November 2020 | None | | | |
| WO | 2022031141 | A1 | 10 February 2022 | US | 2023276389 | A1 | 31 August 2023 |
| WO | 2020165396 | A1 | 20 August 2020 | US | 2023072049 | A1 | 09 March 2023 |
| | | | | EP | 3925141 | A1 | 22 December 2021 |
| | | | | AU | 2023204657 | A1 | 31 August 2023 |
| | | | | AU | 2020220451 | A1 | 07 October 2021 |
| | | | | BR | 112021015936 | A2 | 05 October 2021 |
| | | | | IN | 202117037817 | A | 03 December 2021 |
| US | 2021006438 | A1 | 07 January 2021 | EP | 3761742 | A1 | 06 January 2021 |
| | | | | WO | 2021000303 | A1 | 07 January 2021 |
| | | | | IN | 202247005249 | A | 11 March 2022 |
| | | | | CN | 112188542 | A | 05 January 2021 |
| | | | | VN | 86942 | A | 27 June 2022 |